# EUROPÄISCHE PATENTANMELDUNG

(11) **EP 4 603 713 A1**
(43) Veröffentlichungstag der Anmeldung: **20.08.2025**
(21) Anmeldenummer: 25155472.1
(22) Anmeldetag: 03.02.2025
(51) Int. Cl.: F16B 2/12

(54) **HALTERUNG ZUM BEFESTIGEN AN EINEM ZYLINDERELEMENT**

(30) Priorität: 15.02.2024 DE 102024104216
(71) Anmelder: Scheidt & Bachmann GmbH, 41238 Mönchengladbach (DE)
(72) Erfinder: Izler, Ibrahim, 41065 Mönchengladbach (DE)
(74) Vertreter: Cohausz & Florack

(57) **Zusammenfassung**

Die Erfindung betrifft eine Halterung (400,500) zum Befestigen an einem Zylinderelement (480,580), insbesondere zum Befestigen eines Geräts (566) an dem Zylinderelement (480,580), umfassend einen Grundkörper (102,402) und einen mit dem Grundkörper (102,402) verbindbaren Schlitten (204,404), wobei der Grundkörper (102,402) eine sich in Längsrichtung erstreckende Grundkörperkontaktfläche (106,406) umfasst zum zumindest abschnittsweisen Kontaktieren einer Außenseite des Zylinderelements (480,580), wobei der Grundkörper (102,402) zumindest zwei sich im Wesentlichen in die Längsrichtung erstreckende Grundkörperführungselemente (108,110,408,410) umfasst, wobei die Grundkörperkontaktfläche (106,406) und die Grundkörperführungselemente (108,110,408,410) um einen Grundkörperwinkel zwischen 1° und 25° gegeneinander verkippt sind, wobei der Schlitten (204,404) eine sich in Längsrichtung erstreckende Schlittenkontaktfläche (240,440) zum zumindest abschnittsweisen Kontaktieren der Außenseite des Zylinderelements (480,580) umfasst, wobei der Schlitten (204,404) zumindest zwei sich im Wesentlichen in die Längsrichtung erstreckende Schlittenführungselemente (242,244,442,444) umfasst, wobei die Schlittenkontaktfläche (240,440) und die Schlittenführungselemente (242,244,442,444) um einen Schlittenwinkel zwischen 1° und 25° gegeneinander verkippt sind, wobei die Grundkörperführungselemente (108,110,408,410) zu den Schlittenführungselementen (242,244,442,444) derart korrespondieren, dass durch ein erstes relatives Bewegen des Schlittens (204,404) zu dem Grundkörper (102,402) bei in Eingriff miteinander stehenden korrespondierenden Grundkörperführungselementen (108,110,408,410) und Schlittenführungselementen (242,244,442,444) ein Verkleinern eines Halterungsdurchmessers (dH1, dH2) bewirkt wird, derart, dass ein Verklemmen der Halterung mit dem zwischen dem Grundkörper (102,402) und dem Schlitten (204,404) angeordneten Zylinderelement (480,580) bewirkt wird.

## Beschreibung

Die Erfindung betrifft eine Halterung zum Befestigen an einem Zylinderelement, insbesondere zum Befestigen eines Geräts an dem Zylinderelement. Darüber hinaus betrifft die Erfindung eine Verwendung, ein Verfahren, ein Geräteset und ein Personentransportsystem.

In Personentransportfahrzeugen, aber auch bei anderen Anwendungen, ist es erforderlich, ein Gerät an einem (z.B. im Wesentlichen vertikal, also in Richtung der Schwerkraft, verlaufenden) Zylinderelement dauerhaft zu befestigen. Das Zylinderelement kann insbesondere in Form eines Rohrs gebildet sein. Personentransportfahrzeuge, wie Busse und/oder Bahnen, dienen insbesondere dem Transport von Nutzern. Das Zylinderelement kann beispielweise eine Haltestange in einem Personentransportfahrzeug sein, und das zu befestigende Gerät kann ein Validator für Ticketmedien sein.

Personentransportfahrzeuge werden in (öffentlichen) Personentransportsystemen eingesetzt. Damit ein Nutzer ein Personentransportfahrzeug für seinen Transport in berechtigter bzw. zulässiger Weise nutzen kann, benötigt der Nutzer regelmäßig ein gültiges bzw. validiertes Ticketmedium. Insbesondere ist es im Stand der Technik erforderlich, dass das Ticketmedium, um ein gültiges Ticketmedium zu sein, vor bzw. bei einem Antritt bzw. Start der Transportfahrt durch einen Validator validiert bzw. entwertet werden muss.

Beispielsweise kann ein Validieren eines Ticketmediums das (drahtlose) Auslesen eines Ticketcodes und/oder einer (eindeutigen) Kennung aus einem Ticketmedium des Nutzers umfassen. Die Kennung kann dem Nutzer des Ticketmediums und/oder dem Ticketmedium (eindeutig) zugeordnet sein. Beispielhafte und nicht abschließende Ticketmedien sind Tokens, Chipkarten (bzw. Smartcards), Kreditkarten, Bankkarten (oder dergleichen), Mobiltelefone, Personal Digital Assistants (PDAs), Tablet-PCs, integrierte Schaltungschips, elektronische Pässe, elektronische Ausweisdokumente und elektronische Ringe.

Ein Validator kann mindestens eine elektronische Schnittstelle bzw. ein Erfassungsmodul mit mindestens einer elektronischen Schnittstelle umfassen. Die (kontaktlose oder kontaktbehaftete) Schnittstelle korrespondiert hierbei zu der (kontaktlosen oder kontaktbehafteten) Schnittstelle des Ticketmediums. Nicht abschließende Beispiele für kontaktbehaftete Ticketmediumschnittstellen sind Magnetstreifen und Europay-Mastercard-VISA-Chips (EMV-Chips); Beispiele für bevorzugte kontaktlose Ticketmediumschnittstellen sind Nearfield Communication-Schnittstellen (NFC-Schnittstellen) gemäß ISO 14443.

Ein Erfassungs- bzw. Lesevorgang kann auch als "Tap" bezeichnet werden. Insbesondere kann ein Nutzer das Ticketmedium an oder in die Schnittstelle des Validators halten bzw. tappen, um ein Erfassen des Ticketcodes und/oder der Kennung zu bewirken. Wie bereits beschrieben wurde, kann das Tappen kontaktlos erfolgen, vorzugweise durch NFC (z.B. Smart Cards nach ISO 14443), durch das Einlesen eines optischen Codes (z.B. Barcode, QR-Code), der die elektronische Mediumkennung enthält, aus einem mobilen Endgerät, durch das Einlesen von Daten aus einer Bluetooth-Schnittstelle oder kontaktbehaftet durch das Einlesen von Daten aus einem Magnetstreifen oder aus einem kontaktbehafteten Chip aus einer Bankkarte oder Kreditkarte. Insbesondere kann durch ein entsprechendes Einlesen ein Ticketmedium validiert werden, so dass es insbesondere als ein gültiges Ticketmedium gilt (beispielweise bei einer herkömmlichen Kontrolle durch einen Inspekteur).

Es versteht sich, dass auch andere Ticketmedien eingesetzt werden können, wie herkömmliche Papiertickets.

Um insbesondere ein entsprechendes Validieren bzw. Entwerten eines Ticketmediums bei einem Antritt der Transportfahrt zu ermöglichen, werden Validatoren, auch als Ticketentwerter bezeichnet, regelmäßig an einem Zylinderelement angeordnet, beispielsweise in einem Personentransportfahrzeug.

Zum Befestigen eines Validators an dem Zylinderelement wird im Stand der Technik eine Standard-Halterung verwendet. Diese Standard-Halterung wird an dem Zylinderelement angebracht und trägt bzw. hält den Validator. Hierzu kann die Halterung mindestens ein Befestigungselement zum Befestigen des Validators an der Halterung umfassen.

In der Praxis wird das Befestigen von Validatoren mittels der Standard-Halterung dadurch signifikant erschwert, dass die in den verschiedenartigen Personentransportfahrzeugen vorhandenen Zylinderelemente regelmäßig unterschiedliche Durchmesser haben. Insbesondere gibt es im Stand der Technik eine Vielzahl von verschiedenartigen Personentransportfahrzeugen, die jeweils Zylinderelemente insbesondere in Form von Rohren (bzw. Haltestangen in Personentransportfahrzeugen) mit unterschiedlichen Durchmessern aufweisen. So kann der Durchmesser der Zylinderelemente in den (verschiedenartigen) Personentransportfahrzeugen zwischen 28 mm und 45 mm variieren.

Eine Standard-Halterung des Stands der Technik ist zweiteilig gebildet und umfasst einen Grundkörper und ein Gegenstück. Grundkörper und Gegenstück können miteinander durch eine Mehrzahl von Schraubverbindung verbunden werden, um an dem Zylinderelement befestigt zu werden. Sowohl der Grundkörper als auch das Gegenstück weisen jeweils eine Kontaktfläche auf, deren jeweilige Innenform im Wesentlichen der Außenform des Zylinderelements entspricht. Insbesondere weist die Standard-Halterung in einem verbundenen Zustand des Grundkörpers und des Gegenstücks einen Halterungsdurchmesser auf, der im Wesentlichen dem Durchmesser des maximal möglichen Zylinderelements entspricht, also insbesondere 45 mm.

Für eine sichere Befestigung der Standard-Halterung an dem Zylinderelement wird im Stand der Technik zwischen den Kontaktflächen und der Außenseite des Zylinderelements mit einem Durchmesser kleiner als 45 mm in der Regel eine oder mehrere Adapterhülse/n angeordnet, basierend auf dem Durchmesser des Zylinderelements und den Dicken der verfügbaren Adapterhülsen. Dann ist es erforderlich, dass ein Monteur den Grundkörper und das Gegenstück sowie die mindestens eine Adapterhülse in Position hält, während ein weiterer Monteur die Mehrzahl an Verschraubungen herstellt (bzw. die entsprechenden Schrauben anzieht), so dass die Halterung mitsamt Adapterhülsen an dem Zylinderelement mit ausreichender Sicherheit befestigt wird/ist.

Regelmäßig kommt für die Monteure beim Montagevorgang erschwerend hinzu, dass zusätzlich mindestens ein Kabel, wie ein Datenkabel und/oder ein Strom- bzw. Energiekabel, aus dem Zylinderelement durch eine oder mehrere Adapterhülsen und den Grundkörper geführt werden muss, insbesondere zu dem zu befestigenden Validator.

Insgesamt ist der Aufwand bei der Befestigung eines Validators oder eines anderen Geräts an einem Zylinderelement im Stand der Technik sehr aufwändig.

Daher liegt der vorliegenden Erfindung die Aufgabe zugrunde, eine Möglichkeit zu schaffen, mit der das Befestigen eines Geräts, insbesondere eines Validators, an einem Zylinderelement vereinfacht und insbesondere durch nur einen einzelnen Monteur durchführbar ist.

Die Aufgabe wird gemäß einem ersten Aspekt der Erfindung gelöst durch eine Halterung nach Anspruch 1 zum Befestigen an einem Zylinderelement, insbesondere zum Befestigen eines Geräts an dem Zylinderelement. Die Halterung umfasst einen Grundkörper. Die Halterung umfasst einen mit dem Grundkörper verbindbaren Schlitten. Eine Längsrichtung des Grundkörpers und des Schlittens verläuft im befestigten Zustand der Halterung im Wesentlichen parallel zur Längsachse des Zylinderelements. Der Grundkörper umfasst eine sich in Längsrichtung (des Grundkörpers) erstreckende Grundkörperkontaktfläche zum zumindest abschnittsweisen Kontaktieren einer Außenseite des Zylinderelements. Der Grundkörper umfasst zumindest zwei sich im Wesentlichen in die Längsrichtung (des Grundkörpers) erstreckende Grundkörperführungselemente. Die Grundkörperkontaktfläche und die Grundkörperführungselemente sind um einen Grundkörperwinkel zwischen 1° und 25° gegeneinander verkippt. Der Schlitten umfasst eine sich in Längsrichtung (des Schlittens) erstreckende Schlittenkontaktfläche zum zumindest abschnittsweisen Kontaktieren der Außenseite des Zylinderelements. Der Schlitten umfasst zumindest zwei sich im Wesentlichen in die Längsrichtung (des Schlittens) erstreckende Schlittenführungselemente. Die Schlittenkontaktfläche und die Schlittenführungselemente sind um einen Schlittenwinkel zwischen 1° und 25°gegeneinander verkippt. Die Grundkörperführungselemente korrespondieren zu den Schlittenführungselementen derart, dass durch ein erstes relatives Bewegen (in die Längsrichtung) des Schlittens zu dem Grundkörper bei in Eingriff miteinander stehenden korrespondierenden Grundkörperführungselementen und Schlittenführungselementen ein Verkleinern eines (wirksamen) Halterungsdurchmessers bewirkt wird, so dass ein (selbsthemmendes) Verklemmen der Halterung mit dem zwischen dem Grundkörper und dem Schlitten angeordneten Zylinderelement bewirkt wird. Gemäß einer bevorzugten Ausführungsform der erfindungsgemäßen Halterung können die Grundkörperführungselemente zu den Schlittenführungselementen derart korrespondieren, dass durch ein zweites, dem ersten Bewegen entgegensetztes relatives Bewegen des Schlittens zu dem Grundkörper bei in Eingriff miteinander stehenden korrespondierenden Grundkörperführungselementen und Schlittenführungselementen ein Vergrößern des wirksamen Halterungsdurchmessers bewirkt wird, so dass das Verklemmen der Halterung mit dem zwischen dem Grundkörper und dem Schlitten angeordneten Zylinderelement gelöst wird.

Indem im Gegensatz zum Stand der Technik erfindungsgemäß eine insbesondere zweiteilige Halterung bereitgestellt wird, umfassend einen Grundkörper mit Grundkörperführungselementen und einer Grundkörperkontaktfläche und einen Schlitten mit Schlittenführungselementen und einer Schlittenkontaktfläche, bei der aufgrund einer jeweiligen winkligen Anordnung von jeweiligen Führungselementen zu jeweiligen Kontaktflächen durch ein relatives Bewegen des Schlittens zum Grundkörper ein Verklemmen der Halterung mit dem Zylinderelement bewirkt werden kann, wird eine Möglichkeit geschaffen, mit der die Befestigung eines Geräts, insbesondere eines Validators, an einem Zylinderelement vereinfacht und insbesondere durch nur einen einzelnen Monteur durchführbar ist.

Insbesondere kann der Schlitten zu dem Grundkörper mit einem zwischen Schlitten und Grundkörper angeordneten Zylinderelement derart relativ verschoben werden (mit in Eingriff stehenden korrespondierenden Führungselementen), dass ein wirksamer Halterungsdurchmesser, der gebildet wird durch die sich gegenüberliegenden Schlitten- und Grundkörperkontaktflächen, kontinuierlich verkleinert wird, insbesondere bis der wirksame Halterungsdurchmesser dem äußeren Zylinderelementdurchmesser entspricht. In diesem Zustand, auch als Verklemmungszustand bezeichnet, wird die Halterung aufgrund der in den kontaktierenden Bereichen wirkenden Haftreibung verklemmt an dem Zylinderelement gehalten.

Erfindungsgemäß kann auf Adapterhülsen oder dergleichen verzichtet werden. Zudem kann die Halterung durch einen einzelnen Monteur installiert werden. Mit einer Hand kann der Grundkörper und mit der anderen Hand der Schlitten in den Verklemmungszustand gebracht werden. Optional kann in dem Verklemmungszustand eine Arretierung erfolgen, wie noch beschrieben wird. Insbesondere kann eine finale Arretierung bzw. Fixierung durch einen einzelnen Monteur ausgeführt werden, da die Halterung bereits verklemmt an dem Zylinderelement gehalten bzw. befestigt ist (und kein weiterer Monteur zum Halten der Halterung in dieser Position benötigt wird).

Erfindungsgemäß wird eine Halterung für eine Befestigung an einem Zylinderelement bereitgestellt. Das Zylinderelement hat insbesondere einen kreisförmigen Querschnitt. Beispielsweise kann das Zylinderelement ein Rohr bzw. eine Stange sein. In einem Personentransportfahrzeug (z.B. Bus, Bahn, Wasserfahrzeug etc.) kann sich ein Zylinderelement beispielsweise im Wesentlichen in vertikaler Richtung, also in Richtung der Schwerkraft, erstrecken bzw. verlaufen. Es versteht sich, dass sich das Zylinderelement auch an einer anderen Position befinden kann, wie in einem Bahnhofsbereich und/oder Haltestellenbereich.

Die Halterung dient als Befestigungsvorrichtung zum (dauerhaften, aber insbesondere reversiblen) Befestigen eines Geräts an dem Zylinderelement. Mit anderen Worten, die Halterung kann an dem Zylinderelement befestigt werden und an der Halterung kann (wiederum) das Gerät befestigt werden. Hierzu kann die Halterung mindestens ein Befestigungsmittel aufweisen, an dem das Gerät befestigt werden kann.

Gemäß einer Ausführungsform ist die Halterung eingerichtet zum Tragen eines Geräts mit einem Gewicht von bis zu 10 kg. Mit anderen Worten, die Nutzlast der Halterung kann bis zu 10 kg betragen, beispielsweise ca. 3 kg. Die Halterung, insbesondere der Grundkörper, kann mindestens ein Befestigungselement zum (dauerhaften, aber insbesondere reversiblen) Befestigen des zu haltenden bzw. zu tragenden Geräts umfassen.

Das Gerät kann insbesondere ein Validator (eines Ticketsystems) eines Personentransportsystems sein. Ein Validator bzw. ein Entwerter (z.B. mit einem Gewicht von ca. 3 kg) ist eingerichtet zum Entwerten von Ticketmedien. Es versteht sich, dass auch andere Geräte mittels der Halterung an einem Zylinderelement befestigbar sein können.

Ein Validator kann (zum Entwerten eines Ticketmediums) mindestens eine elektronische Schnittstelle bzw. ein Erfassungsmodul mit mindestens einer elektronischen Schnittstelle umfassen. Die mindestens eine (kontaktlose oder kontaktbehaftete) Schnittstelle korrespondiert hierbei zu der (kontaktlosen oder kontaktbehafteten) Schnittstelle des zu validierenden Ticketmediums. Nicht abschließende Beispiele für kontaktbehaftete Ticketmediumschnittstellen sind Magnetstreifen und Europay-Mastercard-VISA-Chips (EMV-Chips); Beispiele für bevorzugte kontaktlose Ticketmediumschnittstellen sind Nearfield Communication-Schnittstellen (NFC-Schnittstellen) gemäß ISO 14443.

Zum Validieren bzw. Entwerten eines Ticketmediums kann, wie beschrieben wurde, ein Erfassungsvorgang durchgeführt werden. Ein Erfassungs- bzw. Lesevorgang kann auch als "Tap" bezeichnet werden. Insbesondere kann ein Nutzer das Ticketmedium an oder in die Schnittstelle eines Validators halten bzw. tappen, um ein Erfassen eines in dem Ticketmedium gespeicherten Ticketcodes und/oder einer in dem Ticketmedium gespeicherten Kennung zu bewirken, die dem Nutzer des Ticketmediums und/oder dem Ticketmedium eindeutig zugeordnet sein kann.

Wie bereits beschrieben wurde, kann das Tappen kontaktlos erfolgen, vorzugweise durch NFC (z.B. Smart Cards nach ISO 14443), durch das Einlesen eines optischen Codes (z.B. Barcode, QR-Code), der die Mediumkennung und/oder den Ticketcode enthält, aus einem mobilen Endgerät, durch das Einlesen von Daten (Mediumkennung und/oder Ticketcode) aus einer Bluetooth-Schnittstelle oder kontaktbehaftet durch das Einlesen von Daten (Mediumkennung und/oder Ticketcode) aus einem Magnetstreifen oder aus einem kontaktbehafteten Chip aus einer Bankkarte oder Kreditkarte. Insbesondere kann durch ein entsprechendes Einlesen ein Ticketmedium validiert werden, so dass es insbesondere als ein gültiges Ticketmedium gilt (beispielsweise bei einem während der Transportfahrt durchgeführten (herkömmlichen) Inspektionsvorgangs).

Es versteht sich, dass auch andere Ticketmedien (und entsprechende Schnittstellen am Validator) eingesetzt werden können, wie herkömmliche Papiertickets.

Die erfindungsgemäße Halterung ist insbesondere zweiteilig ausgebildet. Bevorzugt wird die Halterung durch genau zwei Teile gebildet, nämlich durch einen Grundkörper und einen Schlitten (nicht einbezogen sind hierbei Kleinteile, wie Schrauben, Muttern, Unterlegscheiben etc.). Insbesondere umfasst die Halterung keine Adapterhülsen oder dergleichen.

Der Grundkörper und der Schlitten sind insbesondere derart gebildet, dass sie miteinander verbindbar bzw. koppelbar sind. Wie noch beschrieben wird, kann der Grundkörper Grundkörperverbindungselemente in Form von mindestens zwei Grundkörperführungselementen und der Schlitten über Schlittenkörperverbindungselemente in Form von mindestens zwei Schlittenführungselementen umfassen, um insbesondere den Grundkörper mit dem Schlitten zu verbinden.

Der Schlitten kann vorzugsweise aus einem Metall gebildet sein, besonders bevorzugt aus Aluminium. Der Grundkörper kann vorzugsweise aus einem Metall gebildet sein, besonders bevorzugt aus Aluminium. Insbesondere können Schlitten und Grundkörper aus dem gleichen Material gebildet sein. Beispielsweise kann ein Schlitten und/oder ein Grundkörper aus Gussmaterial oder einem gefrästen Vollmaterial hergestellt sein. Es versteht sich, dass bei anderen Varianten der Erfindung auch ein anderes Material alternativ oder zusätzlich verwendet werden kann, wie (hochfester) Kunststoff.

Erfindungsgemäß weist der Grundkörper eine Grundkörperkontaktfläche auf. Die Grundkörperkontaktfläche ist eingerichtet zum zumindest abschnittsweisen Kontaktieren einer Außenseite des Zylinderelements. Dies meint insbesondere, dass in einem installierten bzw. montierten Zustand der Halterung die Grundkörperkontaktfläche die Außenseite des Zylinderelements zumindest abschnittsweise unmittelbar kontaktiert. Unmittelbar kontaktiert meint insbesondere, dass keine Adapterhülse oder dergleichen zwischen der Grundkörperkontaktfläche und der Außenseite des Zylinderelements angeordnet ist.

Die Grundkörperkontaktfläche erstreckt sich insbesondere in eine Längsrichtung des Grundkörpers. Die Längsrichtung entspricht im installierten Zustand der Halterung insbesondere der Längsachsenrichtung des Zylinderelements (z.B. eine vertikale Richtung).

Wie bereits beschrieben wurde, umfasst der Grundkörper zumindest zwei Grundkörperführungselemente. Ein Grundkörperführungselement ist insbesondere ein sich in die genannte Längsrichtung erstreckendes Führungselement. Gemäß einer bevorzugten Ausführungsform kann ein Grundkörperführungselement eine Grundkörperführungsschiene sein.

Die zumindest zwei Grundkörperführungselemente können identisch gebildet sein. Ferner können die Grundkörperführungselemente vorzugsweise parallel zueinander verlaufen. Insbesondere können zwei parallel verlaufende (und identisch gebildete) Grundkörperführungsschienen als Grundkörperführungselemente vorgesehen sein.

Erfindungsgemäß verlaufen die Grundkörperführungselemente winklig zu der Grundkörperkontaktfläche. Dies meint insbesondere, dass die Grundkörperkontaktfläche und die (parallel zueinander verlaufenden zumindest zwei) Grundkörperführungselemente um einen Grundkörperwinkel zwischen 1° und 25° gegeneinander verkippt sind.

Erfindungsgemäß weist der Schlitten eine Schlittenkontaktfläche auf. Die Schlittenkontaktfläche ist eingerichtet zum zumindest abschnittsweisen Kontaktieren einer Außenseite des Zylinderelements. Dies meint insbesondere, dass in einem installierten bzw. montierten Zustand der Halterung die Schlittenkontaktfläche die Außenseite des Zylinderelements zumindest abschnittsweise unmittelbar kontaktiert. Unmittelbar kontaktiert meint insbesondere, dass keine Adapterhülse oder dergleichen zwischen der Schlittenkontaktfläche und der Außenseite des Zylinderelements angeordnet ist.

Die Schlittenkontaktfläche erstreckt sich insbesondere in eine Längsrichtung des Schlittens, die im installierten Zustand der Längsrichtung des Grundkörpers entsprechen kann. Die Längsrichtung entspricht im installierten Zustand der Halterung insbesondere der Längsachsenrichtung des Zylinderelements (z.B. eine vertikale Richtung).

Wie bereits beschrieben wurde, umfasst der Schlitten zumindest zwei Schlittenführungselemente. Ein Schlittenführungselement ist insbesondere ein sich in die genannte Längsrichtung erstreckendes Führungselement. Gemäß einer bevorzugten Ausführungsform kann ein Schlittenführungselement eine Schlittenführungsschiene sein.

Die zumindest zwei Schlittenführungselemente können identisch gebildet sein. Ferner können die Schlittenelemente vorzugsweise parallel zueinander verlaufen. Insbesondere können zwei parallel verlaufende (und identisch gebildete) Schlittenführungsschienen als Schlittenführungselemente vorgesehen sein.

Erfindungsgemäß verlaufen die Schlittenelemente winklig zu der Schlittenkontaktfläche. Dies meint insbesondere, dass die Schlittenkontaktfläche und die (parallel zueinander verlaufenden zumindest zwei) Schlittenführungselemente um einen Schlittenwinkel zwischen 1° und 25° gegeneinander verkippt sind.

Wie bereits beschrieben wurde, dienen die Schlittenführungselemente und die Grundkörperführungselemente zum Verbinden des Schlittens und des Grundkörpers miteinander. Insbesondere korrespondieren die Schlittenführungselemente zu den Grundkörperführungselementen. Dies meint insbesondere, dass die Schlittenführungselemente und die Grundkörperführungselemente in Form und Position derart aufeinander abgestimmt sind, dass sie zum Verbinden des Schlittens und des Grundkörpers ineinandergreifen. Insbesondere können die Grundkörperführungselemente ein erstes Führungsschienensystem bilden, das auf ein zweites durch die Grundkörperführungselemente gebildetes Führungsschienensystem abgestimmt ist. Insbesondere kann jede Grundkörperführungsschiene ein Schienenprofil aufweisen, das zu dem Schienenprofil einer entsprechenden Schlittenführungsschiene derart korrespondiert, dass Grundkörperführungsschiene und Schlittenführungsschiene ineinandergreifen und sich gegenseitig (in dem eingegriffenen Zustand) führen können.

Mit anderen Worten, die Grundkörperführungselemente korrespondieren zu den Schlittenführungselementen derart, dass durch ein relatives Bewegen (in die Längsrichtung) des Schlittens zu dem Grundkörper bei in Eingriff miteinander stehenden korrespondierenden Grundkörperführungselementen und Schlittenführungselementen eine Verklemmung der Halterung mit dem Zylinderelement bewirkt wird. Dies meint insbesondere, dass der Schlitten von einer unverklemmten Position in eine verklemmte Position (und insbesondere umgekehrt) bewegbar bzw. verschiebbar ist. In der Verklemmung befindet sich die Halterung insbesondere in einem (selbsthemmenden) Verklemmungszustand.

Insbesondere kann ein Monteur mit einer Hand den Grundkörper mit der Grundkörperkontaktfläche an die Außenseite des Zylinderelements anlegen. Dann kann mit der anderen Hand der Schlitten gehalten und die korrespondierenden Grundkörperführungselemente und Schlittenführungselemente miteinander in Eingriff gebracht werden. Durch ein Bewegen des Schlittens und aufgrund der beschriebenen winkligen Anordnung zwischen den jeweiligen Führungselementen und den jeweiligen Kontaktflächen kann der wirksame Halterungsdurchmesser, der gebildet wird von den sich gegenüberliegenden Schlitten- und Grundkörperkontaktflächen, kontinuierlich verkleinert werden, insbesondere so lange bis der (wirksame) Halterungsdurchmesser dem äußeren Zylinderelementdurchmesser im Wesentlichen entspricht. In diesem Zustand, auch als Verklemmungszustand bezeichnet, wird die Halterung aufgrund der in den kontaktierenden Bereichen wirkenden Haftreibung verklemmt an dem Zylinderelement gehalten.

Gemäß einer Ausführungsform der erfindungsgemäßen Halterung können der Grundkörperwinkel und der Schlittenwinkel im Wesentlichen gleich sein. Durch im Wesentlichen identische Winkel kann insbesondere erreicht werden, dass der unmittelbar zwischen Halterung und Zylinderelement im Verklemmungszustand gebildete Kontaktbereich maximiert wird. Die Haftreibung kann weiter erhöht werden.

Gemäß einer bevorzugten Ausführungsform der erfindungsgemäßen Halterung kann der Grundkörperwinkel zwischen 9° und 12° liegen, vorzugsweise im Wesentlichen 10° betragen. Alternativ oder vorzugsweise zusätzlich kann der Schlittenwinkel zwischen 9° und 12° liegen, vorzugsweise im Wesentlichen 10° betragen. Es ist erkannt worden, dass eine besonders gute Haftreibung zwischen Halterung und Zylinderelement erreicht werden kann. Insbesondere ist erkannt worden, dass bei Grundkörper- und Schlittenwinkeln zwischen 9° und 12° im Verklemmungszustand eine Selbsthemmung von Grundkörper, Schlitten und Zylinderelement herbeigeführt wird. D.h. die einmal miteinander "verklemmte" Anordnung wird durch die Klemmreibung derartig fixiert, dass sie sich nicht selbständig löst, solange nicht durch Vibration oder andere mechanische (manuelle) Einwirkung insbesondere die Position des Schlittens verändert wird. Das bedeutet insbesondere, dass ein einzelner Monteur zunächst den Verklemmungszustand herstellen kann, danach die vormontierte Halterung loslassen kann und sie mit einer Lösungssicherung arretieren bzw. fixieren kann.

Gemäß einer weiteren Ausführungsform der erfindungsgemäßen Halterung kann die Grundkörperkontaktfläche im Wesentlichen parallel zu der Schlittenkontaktfläche verlaufen, wenn die Grundkörperführungselemente und die Schlittenführungselemente miteinander im Eingriff sind.

Gemäß einer weiteren bevorzugten Ausführungsform der erfindungsgemäßen Halterung können der Grundkörper und der Schlitten derart aufeinander abgestimmt bzw. designt sein, dass der Halterungsdurchmesser durch ein relatives Bewegen des Schlittens zu dem Grundkörper bei in Eingriff befindlichen korrespondierenden Grundkörperführungselementen und Schlittenführungselementen zumindest zwischen 28 mm und 45 mm variiert bzw. verstellt werden kann. Insbesondere kann durch das relative Verschieben der Halterungsdurchmesser (grundsätzlich) von zumindest maximal 45 mm auf zumindest minimal 28 mm verkleinert werden. Dies ermöglicht eine Befestigung der Halterung an Zylinderelementen mit Durchmessern zwischen 28 mm und 45 mm, insbesondere ohne die Notwendigkeit von Adapterhülsen oder dergleichen.

Gemäß einer weiteren bevorzugten Ausführungsform der erfindungsgemäßen Halterung kann der Grundkörper eine zu einer Kabelöffnung des Zylinderelements korrespondierende Grundkörperkabelöffnung umfassen. Die Grundkörperkabelöffnung kann eingerichtet sein zum Hindurchführen mindestens eines aus der Kabelöffnung des Zylinderelements herausgeführten Kabels durch die Halterung, insbesondere zu dem zu tragenden Gerät, wie dem Validator.

Das zu tragende Gerät kann mindestens einen elektrischen Verbraucher umfassen und/oder eine Datenschnittstelle, wie die mindestens eine beschriebene elektronische Schnittstelle. Insbesondere kann das mindestens eine Kabel ein Datenkabel und/oder ein Energiekabel sein. Beispielsweise kann das Energiekabel mit einer Energiequelle (z.B. Batterie des Personentransportfahrzeugs) verbunden sein. Das Datenkabel kann beispielsweise mit einer Recheneinrichtung (z.B. des Personentransportfahrzeugs) und/oder einer Kommunikationseinrichtung (z.B. des Personentransportfahrzeugs) verbunden sein.

Vorzugsweise kann das mindestens eine Kabel innerhalb des (hohlzylindrischen) Zylinderelements geführt sein. Durch eine Kabelöffnung im Zylinderelement kann das mindestens eine Kabel aus dem Zylinderelement herausgeführt werden, um mit dem zu tragenden Gerät verbunden zu werden. Um das mindestens eine Kabel aus dem Zylinderelement und durch die Halterung hindurch zu dem Gerät führen zu können, wird gemäß dieser Ausführungsform vorgeschlagen, eine Grundkörperkabelöffnung in dem Grundkörper vorzusehen. Die Grundkörperkabelöffnung kann insbesondere im Wesentlichen zu der Kabelöffnung des Zylinderelements korrespondieren, also insbesondere hinsichtlich Größe und/oder Form auf die Kabelöffnung abgestimmt sein. Vorzugsweise kann die Grundkörperkabelöffnung in der Grundkörperkontaktfläche angeordnet sein.

Die Halterung kann derart an dem Zylinderelement verklemmt gehalten werden, dass die Grundkörperkabelöffnung im Wesentlichen der Kabelöffnung des Zylinderelements gegenüberliegt. Das mindestens eine Kabel kann durch die Kabelöffnung des Zylinderelements hieraus austreten und unmittelbar in die Halterung durch die Grundkörperkabelöffnung eintreten. In sicherer Weise kann/können ein oder mehrere Kabel von dem Zylinderelement durch die Halterung zu dem Gerät verlegt werden.

Gemäß einer besonders bevorzugten Ausführungsform der erfindungsgemäßen Halterung kann der Grundkörper mindestens ein aus der Grundkörperkontaktfläche hervorragendes Verdrehschutzelement umfassen. Das Verdrehschutzelement kann in einem Verklemmungszustand der Halterung in eine Öffnung des Zylinderelements hineinragen bzw. eingreifen. Die Öffnung kann insbesondere die Kabelöffnung sein.

Insbesondere kann das mindestens eine Verdrehschutzelement in einem Randbereich der Grundkörperkabelöffnung angeordnet sein. Vorzugsweise kann das mindestens eine Verdrehschutzelement einen Teilbereich des Randbereichs der Grundkörperkabelöffnung bilden. Vorzugsweise kann das mindestens eine Verdrehschutzelement ein teilkragenförmiges Verdrehschutzelement sein, welches insbesondere einen Teilbereich des Randbereichs der Grundkörperkabelöffnung bildet. Indem das mindestens eine Verdrehschutzelement in dem Verklemmungszustand der Halterung in die Kabelöffnung hineinragt, wird insbesondere ein Verdrehschutz der Halterung bereitgestellt. Insbesondere wird eine (z.B. aufgrund von Vandalismus versuchte) Verdrehung des Geräts in Umfangsrichtung des Zylinderelements (in sicherer Weise) blockiert, insbesondere durch das an den Rand der Kabelöffnung des Zylinderelements anschlagende Verdrehschutzelement.

Besonders bevorzugt können zumindest zwei Verdrehschutzelemente in einem Randbereich angeordnet sein. Die zumindest zwei Verdrehschutzelemente können zumindest teilweise an gegenüberliegenden Randbereichen der Grundkörperkabelöffnung angeordnet sein. Vorzugsweise kann der Außendurchmesser der zumindest zwei sich gegenüberliegenden Verdrehschutzelemente im Wesentlichen dem Innendurchmesser der Kabelöffnung des Zylinderelements entsprechen (z.B. mit einer vorgegebenen Toleranz).

Insbesondere kann der Grundkörper mittels der Verdrehschutzelemente (optimal) an dem Zylinderelement positioniert werden, indem die zumindest zwei Verdrehschutzelemente in die Kabelöffnung einführbar sind. Mit anderen Worten, die Verdrehschutzelemente können in diesem Fall zusätzlich als Positionierungshilfe verwendet werden. Zudem wird ein besonders effektiver Verdrehschutz bereitgestellt.

Gemäß einer weiteren Ausführungsform der erfindungsgemäßen Halterung kann eine Innenform der Schlittenkontaktfläche zu einer Außenform des Zylinderelements im Wesentlichen korrespondieren und/oder eine Innenform der Grundkörperkontaktfläche kann zu einer Außenform des Zylinderelements im Wesentlichen korrespondieren.

Vorzugsweise kann die Innenform der Schlittenkontaktfläche einen im Wesentlichen viertelkreisförmigen bis halbkreisförmigen Innenumriss aufweisen. Es versteht sich, dass der Verlauf des Innenumrisses zumindest teilweise eckig und gradlinig sein kann (um den im Wesentlichen viertelkreisförmigen bis halbkreisförmigen Innenumriss zu bilden), beispielsweise trapezförmig mit einer offenen langen Grundseite. Ein Verklemmen der Halterung kann weiter vereinfacht werden.

Vorzugsweise kann die Innenform der Grundkörperkontaktfläche einen im Wesentlichen viertelkreisförmigen bis halbkreisförmigen Innenumriss aufweisen. Es versteht sich, dass der Verlauf eckig und gradlinig sein kann (um den im Wesentlichen viertelkreisförmigen bis halbkreisförmigen Innenumriss zu bilden), beispielsweise trapezförmig mit einer offenen langen Grundseite. Ein Verklemmen der Halterung kann weiter vereinfacht werden.

Darüber hinaus kann gemäß einer bevorzugten Ausführungsform der erfindungsgemäßen Halterung die Schlittenkontaktfläche mindestens eine sich in die Längsrichtung erstreckende geriffelte Leiste (auch als Riffelleiste bezeichnet) zum Kontaktieren der Außenseite des Zylinderelements umfassen . Vorzugsweise können mindestens zwei geriffelte Leisten angeordnet sein.

Alternativ oder zusätzlich kann die Grundkörperkontaktfläche mindestens eine sich in die Längsrichtung erstreckende geriffelte Leiste (auch als Riffelleiste bezeichnet) zum Kontaktieren der Außenseite des Zylinderelements umfassen. Vorzugsweise können mindestens zwei geriffelte Leisten angeordnet sein

Eine Riffelleiste bzw. Rillenleiste weist insbesondere eine Vielzahl von in Längsrichtung alternierend angeordneten Erhöhungen und Vertiefungen auf. Der vertikale Abstand zwischen einer Vertiefung und einer Erhöhung bzw. die Höhe einer Erhöhung kann zwischen 0,1 mm und 5 mm liegen, vorzugsweise zwischen 0,1 mm und 2 mm. Der Abstand zwischen zwei benachbarten Erhöhungen kann zwischen 0,1 mm und 5 mm liegen, vorzugsweise zwischen 0,1 mm und 2 mm liegen. Die Breite einer geriffelten Leiste kann zwischen 0,2 mm und 5 mm liegen, vorzugsweise zwischen 0,5 mm und 2 mm. Eine Länge einer geriffelten Leiste kann vorzugsweise im Wesentlichen der Länge der Schlittenkontaktfläche bzw. der Grundkörperkontaktfläche entsprechen.

Der Flächenbereich, in dem sich Schlittenkontaktfläche und Grundkörperkontaktfläche der Halterung und Zylinderelement (im Verklemmungszustand) tatsächlich kontaktieren bzw. unmittelbar berühren, kann insbesondere im Wesentlichen durch die mindestens eine (vorzugsweise zwei) geriffelte(n) Leiste(n) (bzw. die genannten Erhöhungen) der Schlittenkontaktfläche und durch die mindestens eine (vorzugsweise zwei) geriffelte(n) Leiste(n) (bzw. die genannten Erhöhungen) der Grundkörperkontaktfläche gebildet sein. Bei einem relativen Bewegen des Schlittens zum Grundkörper zum Bewirken des Verklemmens der Halterung an dem Zylinderelement "verbeißen" sich die Erhöhungen bzw. Zähne einer Riffelleiste in die Außenseite bzw. Außenoberfläche des Zylinderelements. Dies sorgt insbesondere für eine Microverzahnung zwischen jeweiliger Riffelleiste und dem Zylinderelement und damit insbesondere für eine besonders wirksame Haftreibung. Wie noch beschrieben wird, kann dieser Effekt noch weiter verstärkt werden, wenn beispielsweise eine zusätzliche Arretierung bzw. Fixierung erfolgt, beispielsweise mittels mindestens einer Schraubverbindung.

Der Effekt einer Microverzahnung kann ferner vergrößert sein, wenn das Zylinderelement (zumindest im Bereich der Halterung) lackiert und/oder mit einer Beschichtung ummantelt ist, weil sich die Zähne der Riffelleiste in eine Lackschicht oder Beschichtung besonders gut "verbeißen" können.

Gemäß einer weiteren bevorzugten Ausführungsform der erfindungsgemäßen Halterung kann zumindest ein erstes Schlittenführungselement der zwei Schlittenführungselemente als C-Profil gebildet sein. Zumindest ein erstes Grundkörperführungselement der zwei Grundkörperführungselemente kann als T-Profil gebildet sein. Das T-Profil kann zu dem C-Profil korrespondieren, insbesondere derart, dass das T-Profil innerhalb des C-Profils bewegbar bzw. verschiebbar ist.

Alternativ oder zusätzlich kann zumindest ein erstes Grundkörperführungselement der zwei Grundkörperführungselemente als C-Profil gebildet sein. Zumindest ein erstes Schlittenführungselement der zwei Schlittenführungselemente kann als T-Profil gebildet sein. Das T-Profil kann zu dem C-Profil korrespondieren, insbesondere derart, dass das T-Profil innerhalb des C-Profils bewegbar bzw. verschiebbar ist.

Wie bereits beschrieben wurde, können in einer Ausführungsform die Schlittenführungselemente im Wesentlichen identisch gebildet sein. Auch können die Grundkörperführungselemente im Wesentlichen identisch gebildet sein. Vorzugsweise können die Schlittenführungselemente als Führungsschienen mit einem C-Profil gebildet sein und die Grundkörperführungselemente als Führungsschienen mit einem zu dem C-Profil korrespondierenden T-Profil gebildet sein, oder es können die Schlittenführungselemente als Führungsschienen mit einem T-Profil gebildet sein und die Grundkörperführungselemente als Führungsschienen mit einem zu dem T-Profil korrespondierenden C-Profil. In zuverlässiger Weise kann bei entsprechenden Profilen der Führungselemente ein Ineinandergreifen und ein relatives Bewegen des Schlittens und des Grundkörpers zueinander ermöglicht werden.

Gemäß einer weiteren bevorzugten Ausführungsform der erfindungsgemäßen Halterung kann die Halterung eine Lösungssicherung bzw. Arretierung umfassen. Die Lösungssicherung kann eingerichtet sein zumindest zum Verhindern eines ((unbeabsichtigten) zweiten Bewegens zwischen Grundkörper und Schlitten und damit eines (unbeabsichtigten)) Lösens der Verklemmung der Halterung mit dem Zylinderelement. Insbesondere kann es in Personentransportfahrzeugen, aber auch bei anderen Anwendungen, zu Erschütterungen während des Betriebs kommen. Um ein ungewolltes Lösen der Verklemmung bzw. des Verklemmungszustand der Halterung auch bei auftretenden Erschütterungen zu verhindern, wird gemäß dieser Ausführungsform vorgeschlagen, eine Lösungssicherung zur (dauerhaften) Arretierung bzw. Fixierung der Halterung bereitzustellen.

Gemäß einer weiteren Ausführungsform der erfindungsgemäßen Halterung kann die Lösungssicherung eingerichtet sein zum Herstellen eines arretierten bzw. fixierten Verklemmungszustands der Halterung, insbesondere nach einer hergestellten Verklemmung der Halterung durch das beschriebene relative Bewegen des Schlittens und des Grundkörpers zueinander.

Gemäß einer weiteren bevorzugten Ausführungsform der erfindungsgemäßen Halterung kann die Lösungssicherung mindestens eine zwischen dem Schlitten und dem Grundkörper (in dem Verklemmungszustand der Halterung) herstellbare Schraubverbindung umfassen. Insbesondere kann durch eine Schraubverbindung der Schlitten und der Grundkörper miteinander arretiert bzw. fixiert werden. Eine Schraubverbindung kann vorzugweise mittels einer Gewindestange bzw. Schraube und einem Gegenstück, wie einer Mutter, in einfacher Weise hergestellt werden. Ggf. können weitere Elemente eingesetzt werden, wie Sicherungsscheiben etc.

Insbesondere kann durch einen einzelnen Monteur zunächst durch die beschriebene relative Bewegung des Schlittens und des Grundkörpers zueinander eine Verklemmung der Halterung mit dem Zylinderelement bereitgestellt werden. Dann kann durch diesen Monteur die mindestens eine Schraubverbindung hergestellt werden, da wegen der oben beschriebenen Selbsthemmung insbesondere keine Hand zum Halten der Halterung in der gewünschten Position benötigt wird.

Vorzugsweise können zwei (im Wesentlichen parallel verlaufende) Schraubverbindungen (jeweils gebildet durch zumindest eine Gewindestange und ein Gegenstück, wie eine Mutter) vorgesehen sein.

Alternativ oder zusätzlich zu einer Schraubverbindung bzw. Gewindestange mit Gegenstück kann eine Lösungssicherung umfassen: Rasten, Sicherungsbolzen und/oder Klemm- oder Spannvorrichtungen.

Gemäß einer besonders bevorzugten Ausführungsform der erfindungsgemäßen Halterung kann ein Ende einer Gewindestange (bzw. Schraube) der Schraubverbindung verschwenkbar an dem Grundkörper oder an dem Schlitten befestigt sein. Vorzugsweise kann die mindestens eine Gewindestange schwenkbar an dem Grundkörper befestigt sein, beispielswiese mittels eines Drehgelenks. Die Gewindestange kann zwischen einer geöffneten Position und einer geschlossen Position verschwenkbar sein. In der geöffneten Position kann der Schlitten relativ zu dem Grundkörper bei in Eingriff miteinander stehenden korrespondierenden Grundkörperführungselementen und Schlittenführungselementen bewegbar sein, derart, dass ein Verklemmungszustand der Halterung wahlweise bewirkt oder gelöst wird. Insbesondere können in der geöffneten Position die Grundkörperführungselemente und die Schlittenführungselemente miteinander in Eingriff gebracht werden. Dann kann in der geöffneten Position ein relatives Bewegen des Schlittens und des Grundkörpers zueinander bewirkt werden, so dass die Verklemmung der Halterung bewirkt wird.

In der geschlossenen Position (und insbesondere in dem Verklemmungszustand der Halterung) kann die mindestens eine Schraubverbindung herstellbar sein, derart, dass (aus dem Verklemmungszustand) ein arretierter bzw. fixierter Verklemmungszustand der Halterung herstellbar ist.

Insbesondere kann zum Herstellen einer Verklemmung die mindestens eine dauerhaft an dem Grundkörper angebrachte Gewindestange - vorzugsweise können zwei parallel verlaufende Gewindestangen bzw. Schrauben angebracht sein - in die geöffnete Position verschwenkt werden. Nachdem die Verklemmung der Halterung in vorbeschriebener Weise hergestellt ist, kann die mindestens eine Gewindestange durch ein Verschwenken (insbesondere um in Wesentlichen 180°) in die geschlossene Position gesetzt werden. In der geschlossenen Position kann insbesondere mittels eines Gegenstücks (insbesondere einer Mutter) die Schraubverbindung hergestellt werden. Hierzu kann das Gegenstück in bekannter Weise auf das freie Ende der Gewindestange aufgeschraubt werden.

Insbesondere kann der Schlitten über einen Anschlagsabschnitt verfügen, gegen den das Gegenstück durch das Verschrauben gepresst wird. Dies bewirkt insbesondere, dass der Schlitten relativ zum Gegenstück noch (ein wenig) weiterbewegt bzw. verschoben wird.

Insbesondere bei einem Vorhandensein mindestens einer vorbeschriebenen geriffelten Leiste kann die Microverzahnung zwischen Riffelleiste und Zylinderelement und damit insbesondere die Haftreibung noch weiter verstärkt werden. In besonders sicherer Weise kann durch die Halterung ein Gerät dauerhaft an dem Zylinderelement befestigt bzw. gehalten werden.

Wie bereits beschrieben wurde, kann alternativ eine Gewindestange bzw. Schraube auch an dem Schlitten schwenkbar angeordnet sein. Die vorherigen Ausführungen lassen sich hierauf übertragen.

Gemäß einer weiteren Ausführungsform der erfindungsgemäßen Halterung kann der Grundkörper mindestens eine erste Hilfsöffnung umfassen. Die erste Hilfsöffnung kann eingerichtet sein zum Ermöglichen einer ersten Hilfs-Schraubverbindung zwischen dem Grundkörper und dem Zylinderelement (in dem Verklemmungszustand, insbesondere dem arretierten Verklemmungszustand). Vorzugsweise kann die mindestens eine erste Hilfsöffnung (z.B. ein Rundloch) des Grundkörpers in der Grundkörperkontaktfläche angeordnet sein. Insbesondere können mindestens zwei erste Hilfsöffnungen angeordnet sein. Beispielsweise kann die mindestens eine erste Hilfsöffnung zwischen zwei parallel verlaufenden geriffelten Leisten positioniert sein. In einer Ausführungsform kann eine erste Hilfsöffnung in einem oberen Endbereich der Grundkörperkontaktfläche und eine weitere erste Hilfsöffnung in einem unteren Bereich der Grundkörperkontaktfläche angeordnet sein.

Insbesondere ist erkannt worden, dass es in äußerst wenigen Fällen dazu kommen kann, dass die beschriebene Verdrehsicherung und die beschriebene Haftreibung zwischen der (montierten und verspannten bzw. arretierten) Halterung und dem Zylinderelement nicht für eine sichere Befestigung ausreichen kann. In diesem Fall kann die mindestens eine erste Hilfsöffnung ein Einsetzen einer Schraube ermöglichen. Beispielsweise kann eine Spitzschraube durch eine erste Hilfsöffnung eingedreht werden, die sich in das Zylinderelement eindrücken und damit insbesondere die Lage der Halterung relativ zum Zylinderelement (ausreichend) fixieren kann.

Gemäß einer weiteren Ausführungsform der erfindungsgemäßen Halterung kann der Schlitten mindestens eine zweite Hilfsöffnung umfassen. Die zweite Hilfsöffnung kann eingerichtet sein zum Ermöglichen einer zweiten Hilfs-Schraubverbindung zwischen dem Schlitten und dem Zylinderelement. Vorzugsweise kann die mindestens eine zweite Hilfsöffnung (z.B. ein Rundloch) des Schlittens in der Schlittenkontaktfläche angeordnet sein. Beispielsweise kann die mindestens eine zweite Hilfsöffnung zwischen zwei parallel verlaufenden geriffelten Leisten positioniert sein.

Insbesondere ist erkannt worden, dass es in äußerst wenigen Fällen dazu kommen kann, dass die beschriebene Verdrehsicherung und die beschriebene Haftreibung zwischen der (montierten und verspannten bzw. arretierten) Halterung und dem Zylinderelement nicht ausreichen kann für eine sichere Befestigung. In diesem Fall kann die mindestens eine zweite Hilfsöffnung ein Einsetzen einer Schraube ermöglichen. Beispielsweise kann eine Spitzschraube durch eine zweite Hilfsöffnung eingedreht werden, die sich in das Zylinderelement eindrücken und damit insbesondere die Lage der Halterung relativ zum Zylinderelement (ausreichend) fixieren kann.

Ein weiterer Aspekt der Erfindung ist eine Verwendung einer zuvor beschriebenen Halterung zum Befestigen eines Geräts an einem Zylinderelement in Form eines Rohrs. Vorzugsweise kann das Gerät ein zuvor beschriebener Validator sein. Weitere beispielhafte Geräte sind beispielweise kompakte Bezahlautomaten zum insbesondere bargeldlosen Bezahlen oder kompakte Zugangskontrollgeräte zum Auslesen von insbesondere kontaktlosen Zugangsberechtigungen (z.B. optische Codes, NFC-Tickets und ähnlich) oder zum Eingeben von Zugangscodes durch eine Tastatur oder einen Touchscreen.

Ein weiterer Aspekt der Erfindung ist ein Verfahren zum Befestigen einer zuvor beschriebenen Halterung an einem Zylinderelement. Das Verfahren umfasst:
- Anlegen des Grundkörpers an das Zylinderelement, derart, dass die Grundkörperkontaktfläche eine Außenseite des Zylinderelements zumindest abschnittsweise kontaktiert, oder Anlegen des Schlittens an das Zylinderelement, derart, dass die Schlittenkontaktfläche die Außenseite des Zylinderelements zumindest abschnittsweise kontaktiert,
- Ineingriffbringen der korrespondierenden Grundkörperführungselemente und Schlittenführungselemente miteinander, und
- anschließendes relatives Bewegen des Schlittens zu dem Grundkörper in die Längsrichtung, derart, dass ein (selbsthemmendes) Verklemmen der Halterung mit dem Zylinderelement bewirkt wird.

Insbesondere kann ein Anlegen des Grundkörpers an das Zylinderelement derart erfolgen, dass das mindestens eine Verdrehschutzelement in eine Öffnung des Zylinderelements, insbesondere in die Kabelöffnung des Zylinderelements, hineinragt.

Vorzugsweise kann eine optionale Lösungssicherung vorgesehen sein, die zwischen einem geöffneten Zustand und einem geschlossenen Zustand verstellbar ist. Wie bereits beschrieben wurde, kann beispielsweise mindestens eine Gewindestange zwischen einer geöffneten Position (also einem geöffneten Zustand) und einer geschlossenen Position (also in einem geschlossenen Zustand) verschwenkbar an der Halterung angeordnet sein. Vor, während oder nach dem Anlegen des Grundkörpers an das Zylinderelement kann insbesondere die Lösungssicherung in den geöffneten Zustand verstellt werden, beispielsweise die mindestens eine Gewindestange in die geöffnete Position verschwenkt werden.

Ein Anbringen des Schlittens kann insbesondere ein Ineingriffbringen der korrespondierenden Grundkörperführungselemente und Schlittenführungselemente umfassen. Wie bereits beschrieben wurde, können als Grundkörperführungselemente erste Führungsschienen, beispielsweise mit einem T-Profil (bzw. einem C-Profil), und als Schlittenführungselemente zweite Führungsschienen, beispielsweise mit einem zu dem T-Profil korrespondierenden C-Profil (bzw. mit einem zu dem C-Profil korrespondierenden T-Profil) vorgesehen sein. Insbesondere kann ein Ineingriffbringen ein teilweises Einführen der Führungsschienen mit dem T-Profil in die Führungsschienen mit C-Profil umfassen. Insbesondere kann (nach dem Ineingriffbringen) der Schlitten relativ zu dem Grundkörper im Wesentlichen in Längsrichtung (entlang der Längsachse des Zylinderelements) bewegt werden.

Das relative Bewegen des Schlittens zu dem Grundkörper in die Längsrichtung erfolgt, derart, dass ein Verklemmen der Halterung mit dem Zylinderelement bewirkt wird. Insbesondere kann der Schlitten zu dem Grundkörper mit einem zwischen Schlitten und Grundkörper angeordneten Zylinderelement derart relativ verschoben werden, dass der wirksame Halterungsdurchmesser, der gebildet wird von den sich gegenüberliegenden Schlitten- und Grundkörperkontaktflächen, kontinuierlich verkleinert wird, insbesondere bis der (wirksame) Halterungsdurchmesser dem äußeren Zylinderelementdurchmesser im Wesentlichen entspricht. Insbesondere können dann die bevorzugt vorgesehenen zumindest zwei geriffelten Leisten der Halterung das Zylinderelement kontaktieren bzw. (unmittelbar) berühren. Eine vorbeschriebene Microverzahnung kann hergestellt werden.

Nach einem Herstellen des Verklemmungszustands kann vorzugsweise ein arretierter bzw. fixierter Verklemmungszustand hergestellt werden, mittels der genannten Lösungssicherung. Insbesondere kann die Lösungssicherung von dem geöffneten Zustand in den geschlossenen Zustand gesetzt werden. Beispielsweise kann eine Gewindestange in die geschlossene Position verschwenkt werden. Dann kann mittels eines Gegenstücks, beispielsweise einer Mutter, eine Schraubverbindung zwischen Schlitten und Grundkörper hergestellt werden.

Ein weiterer Aspekt der Erfindung ist ein Geräteset. Das Geräteset umfasst eine zuvor beschriebene Halterung. Das Geräteset umfasst ein mittels der Halterung an einem Zylinderelement befestigbaren Gerät. Das Gerätset kann insbesondere ein Validatorset sein, umfassend die zuvor beschriebene Halterung und einen mit mittels der Halterung an einem Zylinderelement befestigbaren Validator als Gerät.

Ein noch weiterer Aspekt der Erfindung ist ein Personentransportfahrzeug. Das Personentransportfahrzeug umfasst ein Zylinderelement in Form eines Rohrs. Das Personentransportfahrzeug umfasst eine an dem Zylinderelement befestigte und zuvor beschriebene Halterung. Das Personentransportfahrzeug umfasst ein an der Halterung angebrachtes Gerät, insbesondere einen (zuvor beschriebenen) Validator.

Es sei angemerkt, dass die Ausdrücke "erste", "zweite" etc. keine Reihenfolge angeben, sondern lediglich zur Unterscheidung zweier Elemente (z.B. Hilfsöffnungen, Führungsschienen etc.) voneinander dienen, sofern nicht ausdrücklich etwas anderes angegeben ist.

Die Merkmale der Halterungen, Verwendungen, Verfahren, Gerätesets und Personentransportfahrzeuge sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Halterung, die erfindungsgemäße Verwendung, das erfindungsgemäße Verfahren, das erfindungsgemäße Geräteset und das erfindungsgemäße Personentransportfahrzeug auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1a: eine schematische Vorderansicht eines Ausführungsbeispiels eines Grundkörpers einer Halterung gemäß der Erfindung,
- Fig. 1b: eine schematische Schnittansicht des Ausführungsbeispiels nach Figur 1a,
- Fig. 1c: eine erste schematische Perspektivansicht des Ausführungsbeispiels nach Figur 1a,
- Fig. 1d: eine schematische Draufsicht des Ausführungsbeispiels nach Figur 1a,
- Fig. 1e: eine weitere schematische Perspektivansicht des Ausführungsbeispiels nach Figur 1a,
- Fig. 2a: eine schematische Vorderansicht eines Ausführungsbeispiels eines Schlittens einer Halterung gemäß der Erfindung,
- Fig. 2b: eine schematische Schnittansicht des Ausführungsbeispiels nach Figur 2a,
- Fig. 2c: eine erste schematische Perspektivansicht des Ausführungsbeispiels nach Figur 2a,
- Fig. 2d: eine weitere schematische Perspektivansicht des Ausführungsbeispiels nach Figur 2a,
- Fig. 2e: eine schematische Draufsicht des Ausführungsbeispiels nach Figur 2a,
- Fig. 3: ein Diagramm eines Ausführungsbeispiels eines Verfahrens gemäß der Erfindung,
- Fig. 4a: eine schematische Perspektivansicht eines Ausführungsbeispiels einer Halterung gemäß der Erfindung in einem ersten Zustand,
- Fig. 4ba: eine weitere schematische Perspektivansicht des Ausführungsbeispiels nach Figur 4a in einem zweiten Zustand,
- Fig. 4bb: eine schematische Draufsicht des Ausführungsbeispiels nach Figur 4a in dem zweiten Zustand,
- Fig. 4ca: eine weitere schematische Perspektivansicht des Ausführungsbeispiels nach Figur 4a in einem dritten Zustand,
- Fig. 4cb: eine schematische Draufsicht des Ausführungsbeispiels nach Figur 4a in dem dritten Zustand,
- Fig. 4da: eine weitere schematische Perspektivansicht des Ausführungsbeispiels nach Figur 4a in einem vierten Zustand,
- Fig. 4db: eine schematische Draufsicht des Ausführungsbeispiels nach Figur 4a in dem vierten Zustand, und
- Fig. 5: eine schematische Ansicht eines Ausführungsbeispiels eines Personentransportfahrzeugs gemäß der Erfindung mit einem Ausführungsbeispiel eines Gerätesets gemäß der Erfindung.

Nachfolgend werden ähnliche Elemente mit ähnlichen Bezugszeichen bezeichnet.

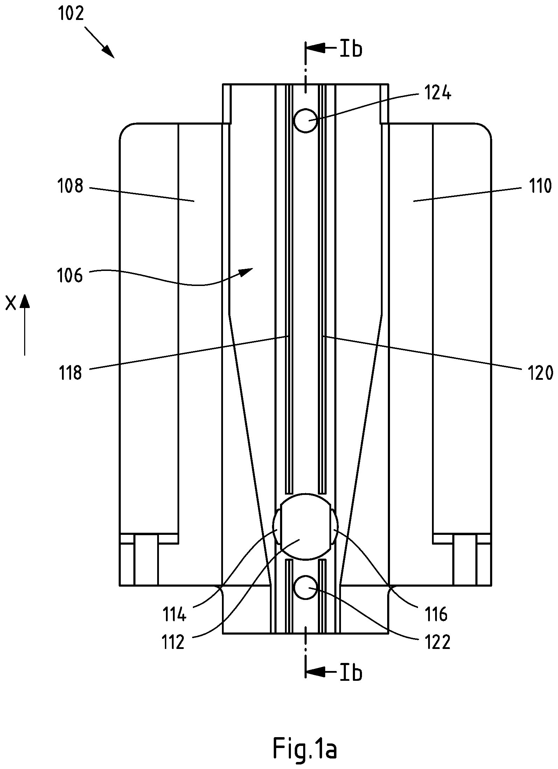

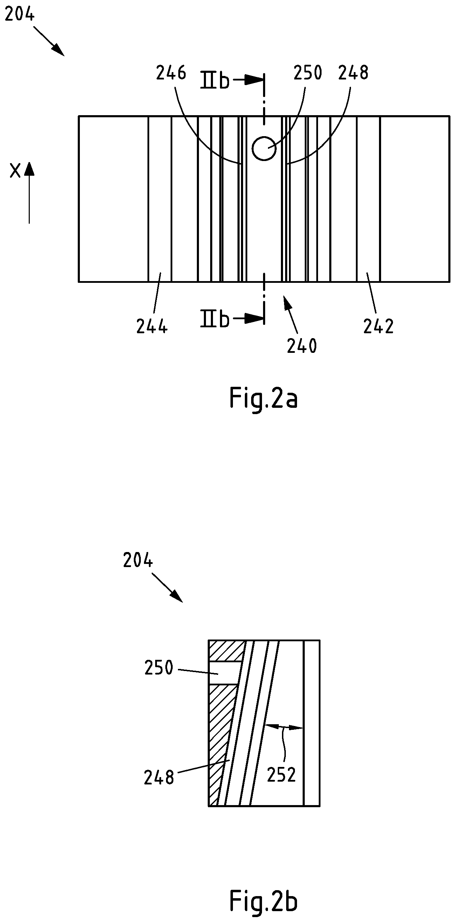

Die Figuren 1a bis 1e zeigen schematische Ansichten eines Grundkörpers 102 eines Ausführungsbeispiels einer Halterung gemäß der Erfindung, und die Figuren 2a bis 2e zeigen insbesondere schematische Ansichten eines Schlittens 204 dieser Halterung.

Insbesondere ist die Halterung zweiteilig gebildet und kann im Wesentlichen aus dem Grundkörper 102 und dem mit dem Grundkörper 102 verbindbaren bzw. koppelbaren Schlitten 204 gebildet sein. Der Grundkörper 102 kann insbesondere aus einem Metall gebildet sein, beispielsweise Aluminium. Vorzugsweise kann der Grundkörper 102 ein Gussteil oder ein gefrästes Teil sein.

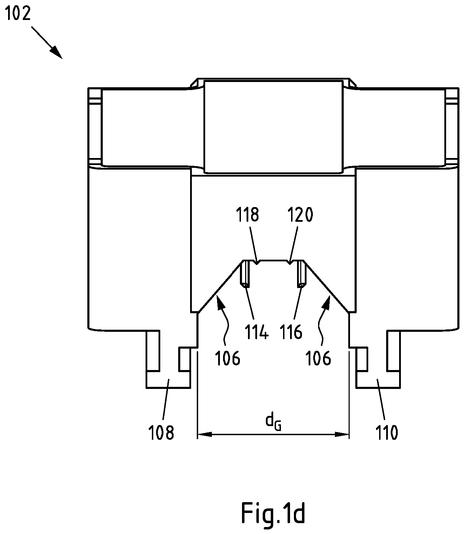

Wie aus den Figuren 1a bis 1e zu erkennen ist, umfasst der Grundkörper 102 eine sich in Längsrichtung x erstreckende Grundkörperkontaktfläche 106 zum zumindest abschnittsweisen Kontaktieren einer Außenseite eines (nicht gezeigten) Zylinderelements. Die Innenform der Grundkörperkontaktfläche 106 korrespondiert insbesondere zu einer Außenform des Zylinderelements. Dies meint beispielsweise, dass, wie insbesondere der Figur 1d entnommen werden kann, der Verlauf des Innenumrisses im Wesentlichen halbkreisförmig sein kann, vorliegend insbesondere zumindest teilweise eckig und gradlinig, beispielsweise trapezförmig mit einer offenen langen Grundseite.

Der Durchmesser d_{G} bzw. die Ausdehnung der offenen langen Grundseite (vgl. insbesondere Fig. 1d) kann gewählt sein abhängig von den Außendurchmessern der in der Praxis vorkommenden Zylinderelemente. Wie bereits beschrieben wurde, können die Außendurchmesser der Zylinderelemente in den (verschiedenen) Personentransportfahrzeugen insbesondere zwischen 28 mm und 45 mm variieren. Der Durchmesser d_{G} kann insbesondere zumindest 45 mm betragen, beispielsweise zwischen 45 mm und 50 mm liegen.

Darüber hinaus umfasst der Grundkörper 102 zumindest zwei sich in die Längsrichtung x erstreckende Grundkörperführungselemente 108, 110. Die zwei Grundkörperführungselemente 108, 110 sind insbesondere identisch gebildet. Ein Grundkörperführungselement 108, 110 ist insbesondere als (erste) Führungsschiene gebildet, vorliegend beispielhaft mit einem T-Profil. Ein erstes Grundkörperführungselement 108 kann an einer ersten Seite der Grundkörperkontaktfläche 106 und das andere Grundkörperführungselement 110 an der anderen (gegenüberliegenden) Seite der Grundkörperkontaktfläche 106 verlaufen.

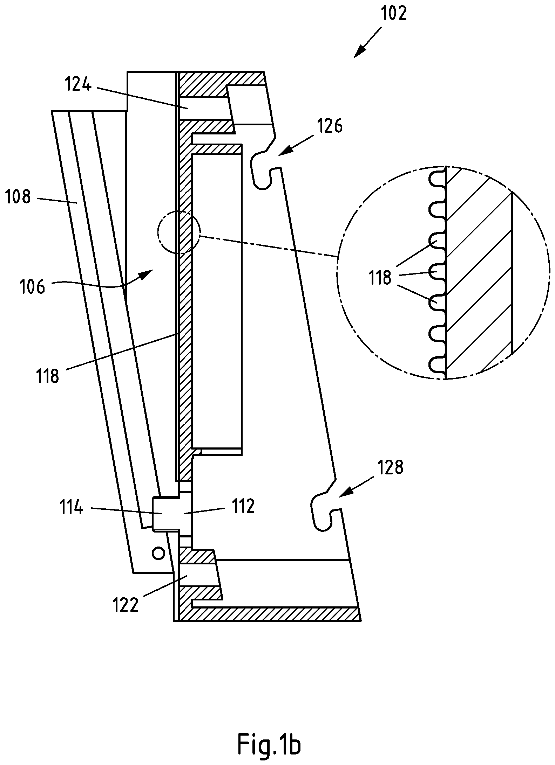

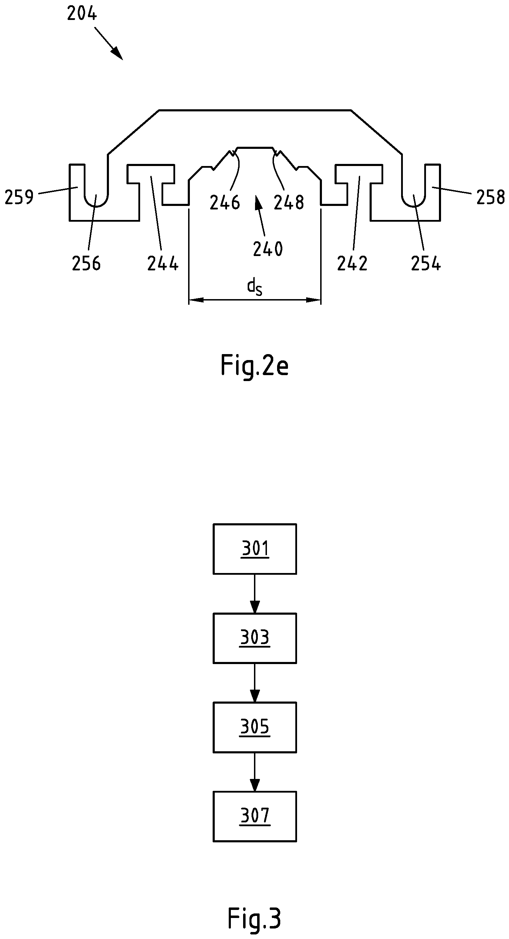

Wie insbesondere der Figur 1b zu entnehmen ist, sind erfindungsgemäß die Grundkörperkontaktfläche 106 und die Grundkörperführungselemente 108, 110 um einen Grundkörperwinkel 130 zwischen 1° und 25° gegeneinander verkippt. Bevorzugt kann der Grundkörperwinkel zwischen 9° und 12° liegen, besonders bevorzugt im Wesentlichen 10° betragen. Wie noch näher erläutert werden wird, insbesondere anhand der Figuren 3 bis 4db, kann durch diese verkippte Anordnung die Anbringung der Halterung signifikant vereinfach werden.

Optional und bevorzugt kann der Grundkörper 102 eine Grundkörperkabelöffnung 112 umfassen, die vorzugsweise in der Grundkörperkontaktfläche 106 angeordnet sein kann. Die Grundkörperkabelöffnung 112 (beispielsweise im Wesentlichen ein Rundloch) kann zu einer Kabelöffnung des Zylinderelements korrespondieren, insbesondere derart, dass in einem verklemmten Zustand ein Kabel aus dem Zylinderelement durch die Kabelöffnung des Zylinderelements hinaus- und unmittelbar in die Grundkörperkabelöffnung 112 hineinführbar ist. Hierzu können sich die genannten Öffnungen im Verklemmungszustand gegenüberliegen. Mit anderen Worten, die Grundkörperkabelöffnung 112 ist insbesondere eingerichtet zum Hindurchführen mindestens eines aus der Kabelöffnung des Zylinderelements herausgeführten Kabels durch die Halterung. Es versteht sich, dass bei Varianten der Erfindung auch zwei oder mehr Kabel vorgesehen sein können.

Darüber hinaus kann der Grundkörper 102 optional mindestens ein aus der Grundkörperkontaktfläche 106 hervorragendes Verdrehschutzelement 114, 116 umfassen. Vorzugsweise und wie dargestellt (vgl. z.B. Fig. 1d) können zwei Verdrehschutzelemente 114, 116 vorgesehen sein. Ein Verdrehschutzelement 114, 116 kann aus der Oberfläche der Innenseite der Grundkörperkontaktfläche 106 hervorragen und insbesondere in einem Verklemmungszustand der Halterung eine Öffnung des Zylinderelements, insbesondere in die Kabelöffnung des Zylinderelements, hineinragen. Bevorzugt können die zwei Verdrehschutzelemente 114, 116 einen Teilbereich des Randbereichs der Grundkörperkabelöffnung 112 bilden und sich insbesondere gegenüberliegen. Vorzugsweise kann das mindestens eine Verdrehschutzelement 114, 116 ein teilkragenförmiges Verdrehschutzelement 114, 116 sein. Wie zu erkennen ist kann, sich ein jeweiliges Verdrehschutzelement 114, 116 in Längsrichtung x erstrecken.

Wie in der bevorzugten Ausführungsform dargestellt ist, kann an die Grundkörperkontaktfläche 106 mindestens eine sich in die Längsrichtung erstreckende geriffelte Leiste 118, 120 zum Kontaktieren der Außenseite des Zylinderelements 480, 580 umfassen. Vorzugsweise können mindestens zwei parallel zueinander verlaufende geriffelte Leisten 118, 120 vorgesehen sein. Wie in der Vergrößerung der Figur 1b angedeutet ist, kann eine geriffelte Leiste 118, 120 eine Vielzahl von in Längsrichtung alternierend angeordneten Erhöhungen bzw. Zähne und Vertiefungen aufweisen.

Darüber hinaus sind in der vorliegenden Ausführungsform zwei erste Hilfsöffnungen 122, 124 angeordnet. Die erste Hilfsöffnung 122, 124 ist insbesondere eingerichtet zum Ermöglichen eines Herstellens einer Hilfs-Schraubverbindung zwischen dem Grundkörper 102 und dem Zylinderelement. Beispielsweise kann eine (nicht gezeigte) Spitzschraube durch die Hilfsöffnung 122, 124 eingedreht werden.

Zum Befestigen des zu haltenden Geräts an der Halterung kann der Grundkörper 102 mindestens ein Befestigungsmittel 126, 128 umfassen, insbesondere eine Mehrzahl von Befestigungsmitteln 126, 128. Es versteht sich, dass der Grundkörper 102 weiter (nicht gezeigte) Sicherungsmittel (oder zumindest Teile von Sicherungsmitteln) aufweisen kann, mit denen ein befestigtes zu haltendes Gerät gegen ungewolltes Entfernen gesichert werden kann.

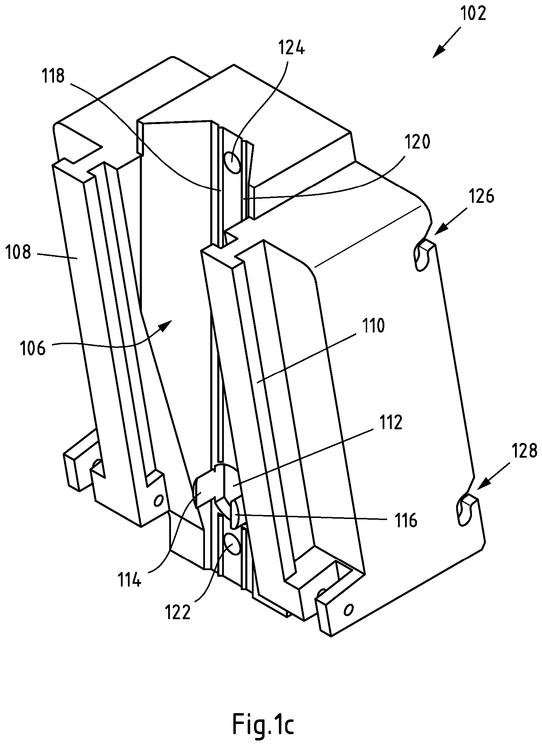

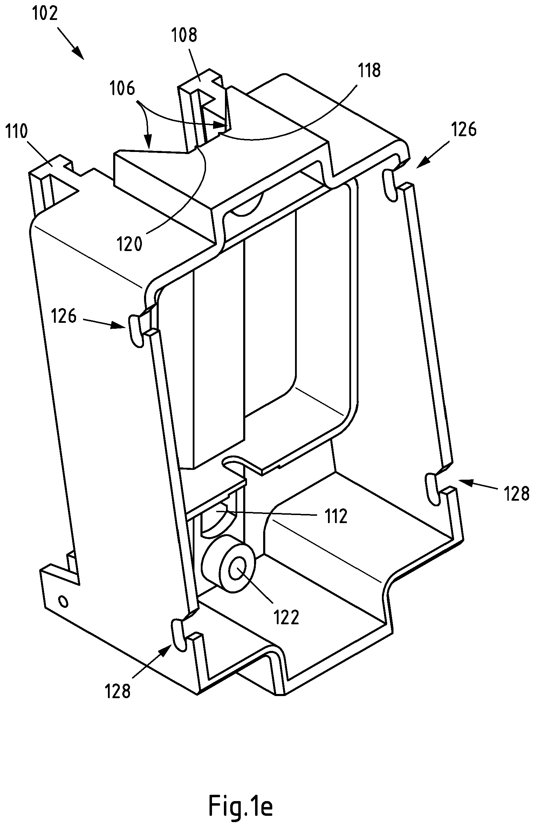

Wie bereits beschrieben wurde, zeigen die Figuren 2a bis 2e verschiedene Ansichten eines Schlittens 204, der mit dem Grundkörper 102 nach Figur 1 verbindbar ist und insbesondere zusammen mit dem Grundkörper 102 die (zweiteilige) Halterung bildet.

Der Schlitten 204 kann insbesondere aus einem Metall gebildet sein, beispielsweise Aluminium. Vorzugsweise kann der Schlitten 204 ein Gussteil oder ein gefrästes Teil sein.

Der Schlitten 204 umfasst eine sich in die Längsrichtung x erstreckende Schlittenkontaktfläche 240 zum zumindest abschnittsweisen Kontaktieren der Außenseite des (nicht dargestellten) Zylinderelements. Die Innenform der Schlittenkontaktfläche 240 korrespondiert insbesondere zu einer Außenform des Zylinderelements. Dies meint beispielsweise, dass, wie insbesondere der Figur 2e entnommen werden kann, der Verlauf des Innenumrisses im Wesentlichen halbkreisförmig sein kann, vorliegend insbesondere teilweise eckig und gradlinig, beispielsweise trapezförmig mit einer offenen langen Grundseite.

Der Durchmesser d_{S} bzw. die Ausdehnung der offenen langen Grundseite kann gewählt sein abhängig von den Außendurchmessern der in der Praxis vorkommenden Zylinderelemente, wie bereits beschrieben wurde. Der Durchmesser ds kann insbesondere zumindest 45 mm betragen, beispielsweise zwischen 45 mm und 50 mm liegen. Insbesondere können die genannten Durchmesser ds und d_{G} aufeinander abgestimmt sein und vorzugsweise im Wesentlichen identisch sein.

Darüber hinaus umfasst der Schlitten 204 zumindest zwei sich in die Längsrichtung x erstreckende Schlittenführungselemente 242, 244. Die zwei Schlittenführungselemente 242, 244 sind insbesondere identisch gebildet. Ein Schlittenführungselement 242, 244 ist insbesondere als (zweite) Führungsschiene gebildet, vorliegend beispielhaft mit einem C-Profil. Ein erstes Schlittenführungselement 242 kann an einer ersten Seite der Schlittenkontaktfläche 240 und das andere Schlittenführungselement 244 an der anderen (gegenüberliegenden) Seite der Schlittenkontaktfläche 240 verlaufen.

Wie insbesondere der Figur 2b zu entnehmen ist, sind erfindungsgemäß die Schlittenkontaktfläche 240 und die Schlittenführungselemente 242, 244 um einen Schlittenwinkel 252 zwischen 1° und 25° gegeneinander verkippt. Bevorzugt kann der Schlittenwinkel 252 zwischen 9° und 12° liegen, besonders bevorzugt im Wesentlichen 10° betragen. Wie noch näher, insbesondere anhand der Figuren 3 bis 4db, erläutert werden wird, kann durch diese verkippte Anordnung die Anbringung der Halterung signifikant vereinfach werden.

Besonders bevorzugt können der Grundkörperwinkel 130 und der Schlittenwinkel 252 im Wesentlichen gleich sein, vorzugsweise beide zwischen 9° und 12° liegen, besonders bevorzugt im Wesentlichen 10° betragen.

Wie in der bevorzugten Ausführungsform dargestellt ist, kann die Schlittenkontaktfläche 240 mindestens eine sich in die Längsrichtung erstreckende geriffelte Leiste 246, 248 zum Kontaktieren der Außenseite des Zylinderelements 480,580 umfassen. Vorzugsweise können mindestens zwei parallel zueinander verlaufende geriffelte Leisten 246, 248 vorgesehen sein. Eine geriffelte Leiste 246, 248 kann entsprechend der vorbeschriebenen geriffelten Leisten gebildet sein (vgl. auch Vergrößerung der Figur 1b).

Darüber hinaus umfasst der Schlitten 204 in der vorliegenden Ausführungsform optional eine zweite Hilfsöffnung 250. Die zweite Hilfsöffnung 250 (z.B. ein Rundloch) kann insbesondere in der Schlittenkontaktfläche 240 angeordnet sein. Die zweite Hilfsöffnung 250 ist insbesondere eingerichtet zum Ermöglichen eines Herstellens einer Hilfs-Schraubverbindung zwischen dem Schlitten 204 und dem Zylinderelement.

Beispielsweise kann eine (nicht gezeigte) Spitzschraube durch die zweite Hilfsöffnung 250 eingedreht werden.

Optional und bevorzugt können zwei in die Längsrichtung x verlaufende Nuten 254, 256 angeordnet sein. Insbesondere können die Nuten 254, 256 im Wesentlichen parallel zu den Schlittenführungselementen 242, 244 angeordnet sein. Wie noch näher beschrieben wird, können die Nuten 254, 256 zur Aufnahme von jeweiligen Gewindestangen bzw. Schrauben einer Lösungssicherung der Halterung eingerichtet sein. Das Ende einer jeweiligen Nut 254, 256 kann als Anschlagsabschnitt 258, 259 dienen, an den ein (nicht gezeigtes) Gegenstück einer Schraubverbindung angeschlagen werden kann.

Die Grundkörperführungselemente 108, 110 können zu den Schlittenführungselementen 242, 244 derart korrespondieren, dass durch ein relatives Bewegen des Schlittens 204 zu dem Grundkörper 102 bei in Eingriff miteinander stehenden korrespondierenden Grundkörperführungselementen 108, 110 und Schlittenführungselementen 242, 244 ein Verklemmen der Halterung mit dem Zylinderelement bewirkt wird.

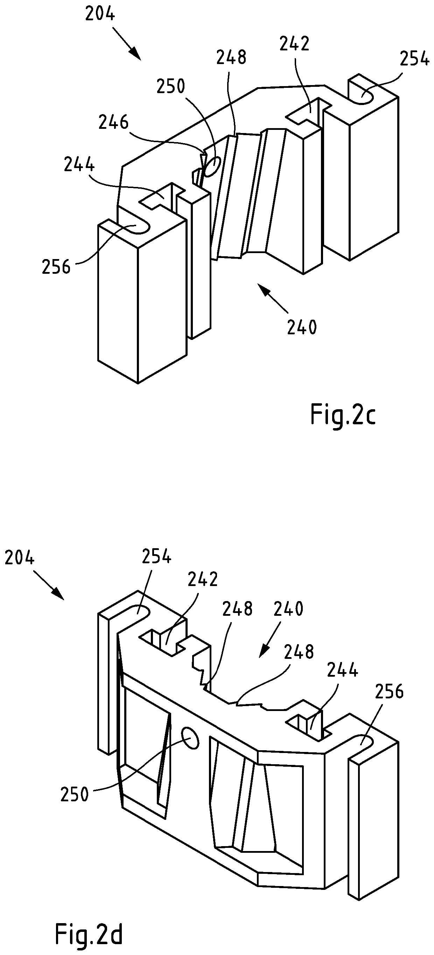

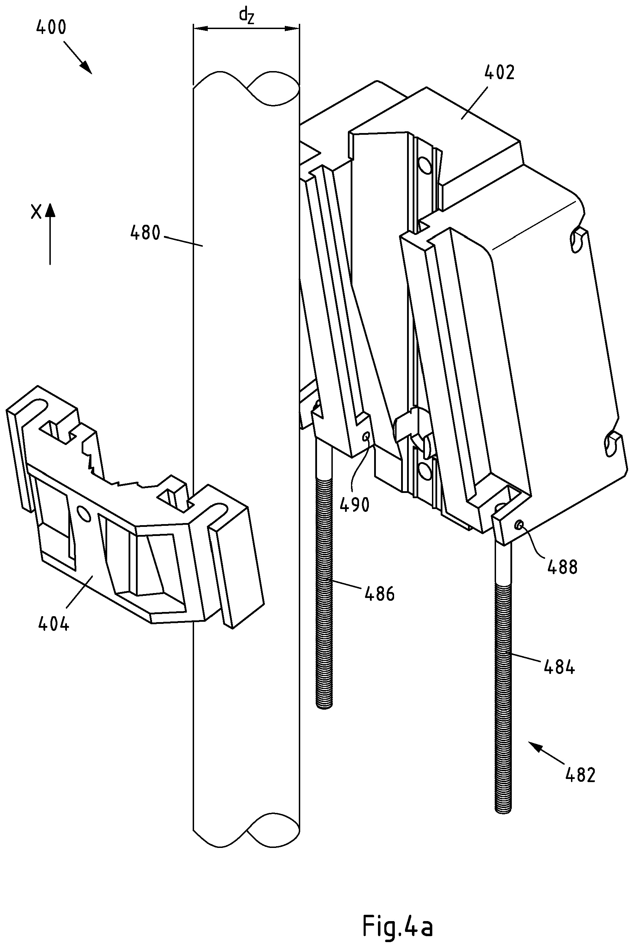

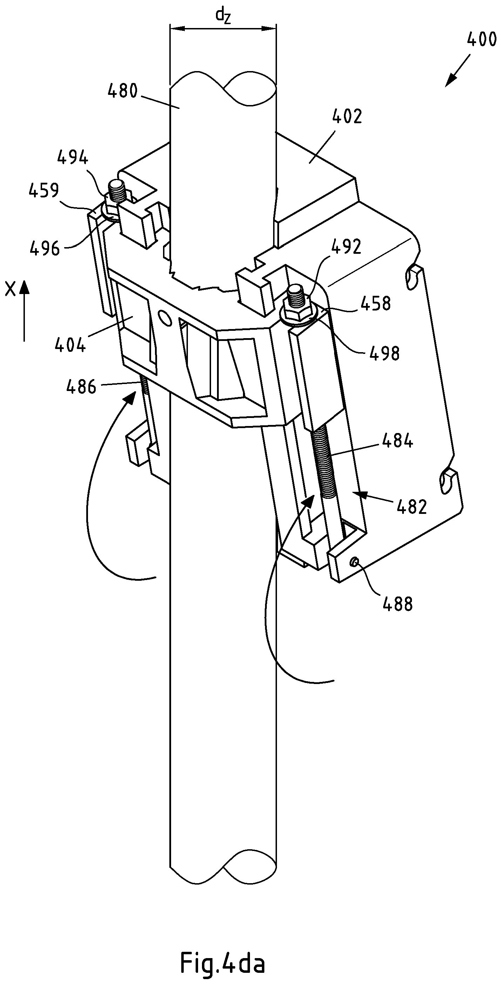

Die Figur 3 zeigt ein Diagramm eines Verfahrens zum Befestigen einer Halterung an einem Zylinderelement. Das Verfahren wird näher mit Hilfe der Figuren 4a bis 4db beschrieben, welche ein bevorzugtes Ausführungsbeispiel einer Halterung 400 gemäß der vorliegenden Erfindung in verschiedenen Zuständen zeigt, insbesondere verschiedenen Montagezuständen. Zur Vermeidung von Wiederholungen werden nachfolgend im Wesentlichen nur die Unterschiede der Halterung 400 zu den Ausführungsbeispielen nach Figur 1 und 2 beschrieben, und ansonsten wird auf die vorherigen Ausführungen verwiesen.

Die Figur 4a zeigt die Halterung 400 insbesondere in einem ersten Zustand, in dem weder der Grundkörper 402 noch der Schlitten 404 in Kontakt mit dem Zylinderelement 480 ist. Das Zylinderelement 480 kann vorzugsweise ein (hohlzylindrisches) Rohr sein. Beispielsweise kann das Rohr in einem (nicht gezeigten) Personentransportfahrzeug oder dergleichen angeordnet sein. In einem in dem Personentransportfahrzeug verbauten Zustand kann das Zylinderelement 480 in eine vertikale Richtung x verlaufen. Darüber hinaus kann ein Durchmesser dz des Zylinderelements 480 zwischen 28 mm und 45 mm variieren. Insbesondere können in verschiedenartigen Personentransportfahrzeugen Zylinderelemente mit unterschiedlichen Durchmessern angeordnet sein.

Durch das Innere des Zylinderelements 480 kann mindestens ein (nicht gezeigtes) Kabel geführt sein, wie ein Datenkabel und/oder Energiekabel. Das Kabel kann dienen zur Energieversorgung mindestens eines elektrischen Verbrauchers des (nicht gezeigten) Geräts, das durch die Halterung befestigt werden kann, und/oder zum Austauschen von Daten zwischen dem Gerät und einer Rechenvorrichtung, wie einer Rechenvorrichtung eines Personentransportfahrzeugs und/oder einem Hintergrundsystem (z.B. gebildet durch mindestens einen Server, einer Cloud etc.) eines Personentransportsystems (insbesondere umfassend zumindest das Personentransportfahrzeug).

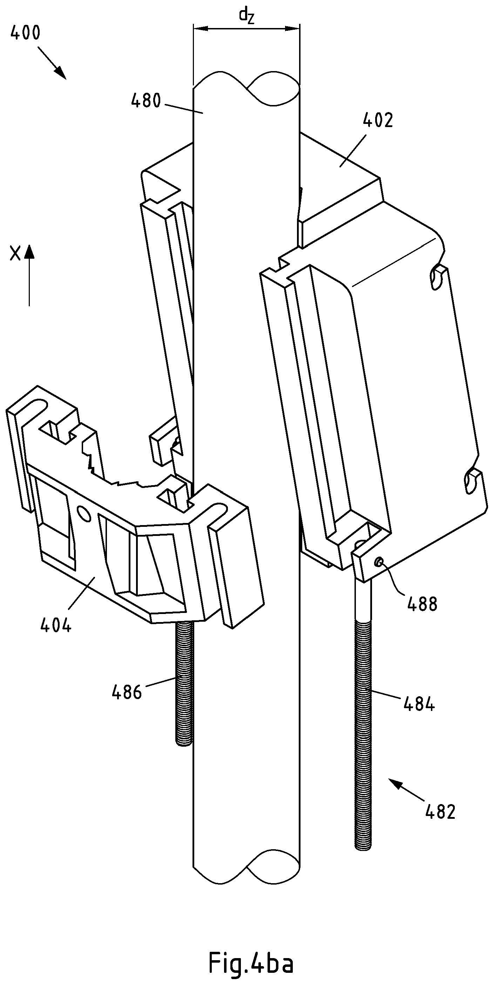

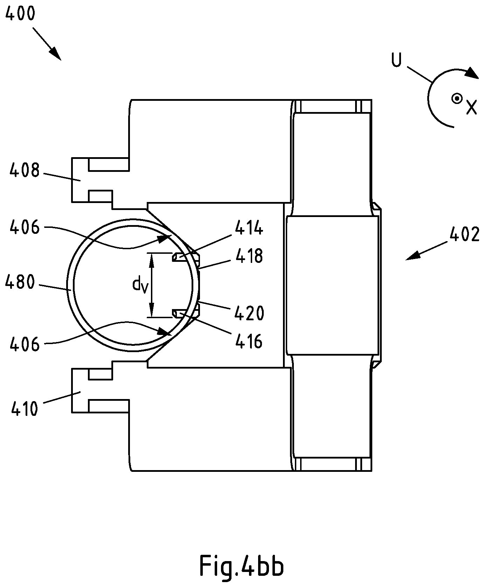

In einem Schritt 301 erfolgt ein Anlegen des Grundkörpers 402 an das Zylinderelement 480, derart, dass die Grundkörperkontaktfläche 406 eine Außenseite des Zylinderelements 480 zumindest abschnittsweise kontaktiert, wie es in den Figuren 4ba und 4bb gezeigt ist (alternativ kann ein Anlegen des Schlittens an das Zylinderelement erfolgen, derart, dass die Schlittenkontaktfläche die Außenseite des Zylinderelements zumindest abschnittsweise kontaktiert). Insbesondere befindet sich die Halterung in einem ersten Vormontierungszustand, bei dem der Grundkörper bereits an dem Zylinderelement (lose) angeordnet ist. Insbesondere kontaktieren die geriffelten Leisten 418, 420 in diesem ersten Vormontierungszustand die Außenseite des Zylinderelements 480.

Wie den Figuren 4a bis 4db zu entnehmen ist, umfasst die Halterung 400 vorzugsweise eine Lösungssicherung 482. Die Lösungssicherung 482 ist insbesondere eingerichtet zumindest zum Verhindern eines unbeabsichtigten zweiten Bewegens zwischen Grundkörper (102, 402) und Schlitten (204, 404) und damit eines Lösens der Verklemmung der Halterung 400 mit dem Zylinderelement 480 bzw. des Verklemmungszustand der Halterung 400. Wie noch näher beschrieben wird, kann die Lösungssicherung 482 eingerichtet sein zum Herstellen einer (dauerhaften, aber insbesondere lösbaren) Arretierung bzw. Fixierung der Halterung 400 an dem Zylinderelement 480.

Vorzugsweise kann die Lösungssicherung 482 mindestens eine zwischen dem Schlitten 404 und dem Grundkörper 402 herstellbare Schraubverbindung umfassen, vorzugsweise zwei Schraubverbindungen. Bevorzugt kann die Lösungssicherung 482 zwei Gewindestanden 484, 486 bzw. Schrauben und eine entsprechende Anzahl an Gegenstücken 492, 494 umfassen, insbesondere in Form von Muttern. Optional können jeweils mindestens eine Unterlegscheibe 496, 498 vorhanden sein.

Vorzugsweise kann ein Ende einer jeweiligen Gewindestange 484, 486 der Schraubverbindung verschwenkbar (z.B. mittels eines Drehgelenks 488, 490) an dem Grundkörper 402 befestigt sein. Bei Varianten der Erfindung ist auch eine Befestigung an dem Schlitten möglich.

Die jeweilige Gewindestange 484, 486 kann zwischen einer geöffneten Position und einer geschlossenen Position verschwenkbar sein. Insbesondere kann in Schritt 301 die Lösungssicherung 482 in einen geöffneten Zustand gesetzt werden. Bei dem vorliegenden Ausführungsbeispiel meint dies insbesondere, dass die jeweilige Gewindestange 484, 486 in die geöffnete Position (z.B. durch einen Monteur) bewegt wird, wie es in den Figuren 4ba und 4bb dargestellt ist.

Das Anlegen des Grundkörpers 402 an das Zylinderelement 480 kann insbesondere ein Einführen bzw. Einsetzen der Verdrehschutzelemente 414, 416 in eine Öffnung des Zylinderelements, insbesondere in die Kabelöffnung des Zylinderelements 480, umfassen. Der Außendurchmesser dv (vgl. Fig. 4bb) der zumindest zwei sich gegenüberliegenden Verdrehschutzelemente 414, 416 kann im Wesentlichen dem (nicht gezeigten) Innendurchmesser einer Öffnung des Zylinderelements, insbesondere der Kabelöffnung des Zylinderelements 480, entsprechen (z.B. mit einer vorgegebenen Toleranz). Hierdurch kann in einem Verklemmungszustand der Halterung 400 ein Verdrehen der Halterung (und damit des daran angebrachten Geräts) verhindert werden. Zudem kann der Grundkörper 402 und damit die Halterung 400 in exakter (bzw. gewünschter) Position an dem Zylinderelement 480 angeordnet werden. In dieser Position kann dann das mindestens eine Kabel aus dem Zylinderelement 480 durch die Kabelöffnung hinaus und in die Grundkörperkabelöffnung 412 hineingeführt werden (insbesondere zu dem Gerät).

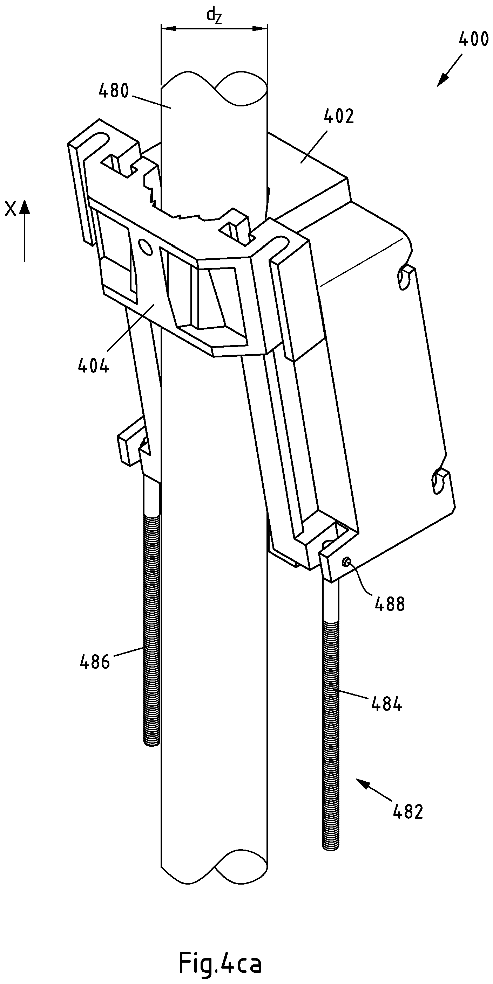

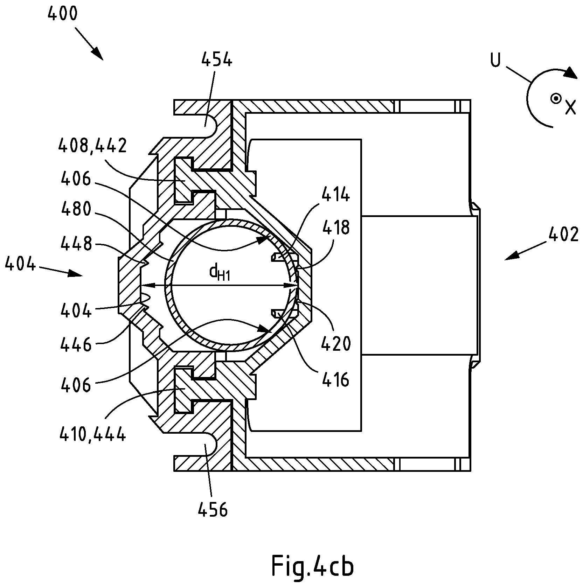

In einem Schritt 303 erfolgt (z.B. durch einen Monteur) ein Ineingriffbringen der korrespondierenden Grundkörperführungselemente 408, 410 und Schlittenführungselemente 442, 444 miteinander, wie es in den Figuren 4ca und 4cb dargestellt ist.

So greift eine Führungsschiene mit T-Profil in eine korrespondierende Führungsschiene mit C-Profil ein, wie es insbesondere in Figur 4cb zu sehen ist. In diesem zweiten Vormontierungszustand der Halterung 400 ist der Schlitten 404 relativ zu dem Grundkörper 402 bewegbar bzw. verschiebbar, insbesondere in die Längsrichtung x (die im Wesentlichen identisch ist mit der Längsachsenrichtung des Zylinderelements 480).

Wie in den Figuren 4ca und 4cb zu erkennen ist, ist die Lösungssicherung 482 auch in dem zweiten Vormontagezustand in dem geöffneten Zustand. Mit anderen Worten, die Gewindestangen 484, 486 sind in dem vorliegenden Ausführungsbeispiel in der geöffneten Position. In der geöffneten Position ist insbesondere der Schlitten 404 relativ zu dem Grundkörper 402 bei in Eingriff miteinander stehenden korrespondierenden Grundkörperführungselementen 408, 410 und Schlittenführungselementen 442, 444 bewegbar, derart, dass ein Verklemmungszustand der Halterung 400 bewirkt werden kann.

In Schritt 305 erfolgt ein relatives Bewegen des Schlittens 404 zu dem Grundkörper 402 in die Längsrichtung x, derart, dass eine insbesondere selbsthemmende Verklemmung der Halterung 400 mit dem Zylinderelement 480 bewirkt wird.

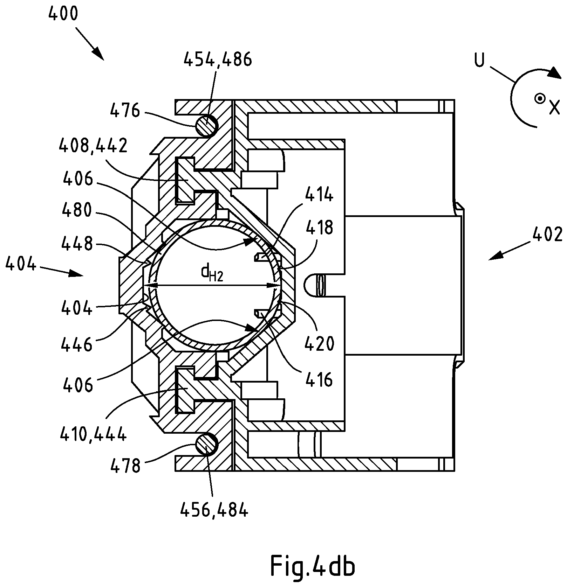

Insbesondere kann der Schlitten 404 zu dem Grundkörper 402 derart relativ verschoben werden, dass insbesondere ein wirksamer Halterungsdurchmesser d_{H1}, der sich ergibt aus dem Abstand zwischen der gegenüberliegenden Schlittenkontaktfläche 440 und Grundkörperkontaktfläche 406, kontinuierlich verkleinert wird (vgl. Fig. 4cb und 4db), insbesondere bis der wirksame Halterungsdurchmesser d_{H2} dem äußeren Zylinderelementdurchmesser im Wesentlichen entspricht. In diesem Zustand, auch als Verklemmungszustand (nicht gezeigt) bezeichnet, wird die Halterung 400 aufgrund der in den kontaktierenden Bereichen wirkenden Haftreibung verklemmt an dem Zylinderelement gehalten. Insbesondere kontaktieren die geriffelten Leisten 418, 420, 446, 448 in diesem Zustand die Außenseite des Zylinderelements 480. Es tritt dabei insbesondere eine Selbsthemmung von Grundkörper 402, Schlitten 404 und Zylinderelement 480 ein, die sich nicht selbständig löst, solange nicht durch Vibration oder andere mechanische (manuelle) Einwirkung insbesondere die Position des Schlittens 404 verändert wird. Das bedeutet, dass ein einzelner Monteur zunächst den Verklemmungszustand herstellen kann, danach die vormontierte Halterung loslassen kann und sie mit der Lösungssicherung 482 arretieren bzw. fixieren kann.

Vorzugsweise kann in Schritt 307 nach einem Herstellen des Verklemmungszustands vorzugsweise ein arretierter bzw. fixierter Verklemmungszustand hergestellt werden, mittels der Lösungssicherung 482. Insbesondere kann die Lösungssicherung 482 von dem geöffneten Zustand in den geschlossenen Zustand gesetzt werden. Insbesondere können die zwei Gewindestangen 484, 486 in die geschlossene Position (z.B. durch den Monteur) verschwenkt werden. In der geschlossenen Position kann ein jeweiliges Gewindestangenmittelstück 476, 478 (vgl. Fig. 4d) durch die jeweilige Nut 454, 456 verlaufen. Das jeweilige offene Ende kann aus der jeweiligen Nut 454, 456 herausragen. Zum Herstellen einer Schraubverbindung kann ein Gegenstück 492, 494 in Form einer Mutter auf das jeweilige Ende aufgeschraubt werden und insbesondere an den jeweiligen Anschlagsabschnitt 458, 459 anschlagen. Eine sichere Fixierung bzw. Arretierung der Halterung 400 kann erreicht werden.

Wie bereits beschrieben wurde, kann optional mindestens eine Hilfs-Schraubverbindung hergestellt werden. Insbesondere kann eine (nicht gezeigte) Schraube durch eine erste Hilfsöffnung 422, 424 und/oder durch eine zweite Hilfsöffnung 450 eingeschraubt werden, um die Halterung 400 (noch stärker) an dem Zylinderelement 480 zu fixieren.

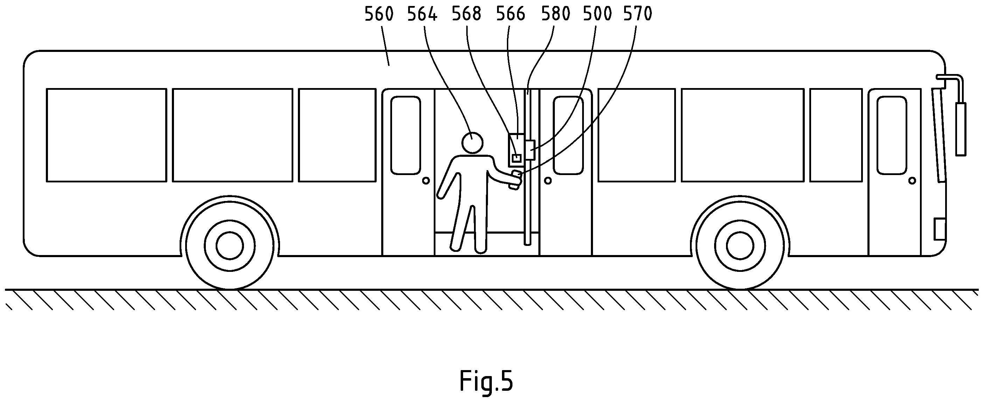

Die Figur 5 zeigt eine schematische Ansicht eines Ausführungsbeispiels eines Personentransportfahrzeugs 560 gemäß der Erfindung mit einem Ausführungsbeispiel eines Gerätesets 562 gemäß der Erfindung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen. Ferner sei angemerkt, dass auf die Darstellung der Details der Halterung 500 zu Gunsten einer besseren Übersicht verzichtet wurde. Die Halterung 500 kann insbesondere entsprechend einer zuvor beschriebenen Halterung (vgl. z.B. Fig. 1 bis 4db) gebildet sein.

Das Personentransportfahrzeug 560 ist eingerichtet zum Transportieren von Nutzern 564 bzw. Passagieren. Beispielhaft ist das Personentransportfahrzeug 560 vorliegend ein Bus. Es versteht sich, dass bei Varianten der Erfindung andere Personentransportfahrzeuge vorgesehen sein können, wie Schienenfahrzeuge oder Wasserfahrzeuge.

Wie zu erkennen ist, umfasst das Personentransportfahrzeug 560 in einem Einstiegsbereich und/oder Ausstiegsbereich des Personentransportfahrzeugs 560 mindestens ein Zylinderelement 580, insbesondere in Form eines Rohrs bzw. einer Haltestange. Insbesondere kann in einem Personentransportfahrzeug 560 eine Mehrzahl von Zylinderelementen angeordnet sein.

Das Geräteset 562 umfasst die Halterung 500 und ein mittels der Halterung 500 an dem Zylinderelement 580 befestigbares Gerät 566. An dem Zylinderelement 580 ist die Halterung 500 befestigt, insbesondere fixiert bzw. arretiert, wie bereits beschrieben wurden. An der Halterung 500 ist wiederum das Gerät 566 befestigt. Mit anderen Worten, das Gerät 566 ist im befestigten Zustand gezeigt.

Das Gerät 566 kann ein Validator 566 sein und kann mindestens eine elektronische Schnittstelle 568 bzw. ein Erfassungsmodul mit mindestens einer elektronische Schnittstelle 568 umfassen. Die (kontaktlose oder kontaktbehaftete) Schnittstelle 568 korrespondiert hierbei zu der (kontaktlosen oder kontaktbehafteten) Schnittstelle des Ticketmediums 570 (z.B. ein Smartphone).

Zum Validieren eines Ticketmediums 570 kann ein Lesevorgang an dem Validator 566 durchgeführt werden. Ein Erfassungs- bzw. Lesevorgang kann auch als "Tap" bezeichnet werden. Insbesondere kann ein Nutzer 564 das Ticketmedium 570 an oder in die Schnittstelle 568 des Validators 566 halten bzw. tappen, um ein Erfassen des Ticketcodes und/oder der Kennung zu bewirken. Wie bereits beschrieben wurde, kann das Tappen kontaktlos erfolgen, vorzugweise durch NFC (z.B. Smart Cards nach ISO 14443), durch das Einlesen eines optischen Codes (z.B. Barcode, QR-Code), der die elektronische Mediumkennung enthält, aus einem Ticketmedium 570, durch das Einlesen von Daten aus einer Bluetooth-Schnittstelle oder kontaktbehaftet durch das Einlesen von Daten aus einem Magnetstreifen oder aus einem kontaktbehafteten Chip aus einer Bankkarte oder Kreditkarte. Insbesondere kann durch ein entsprechendes Einlesen ein Ticketmedium 570 validiert werden, so dass es insbesondere als ein gültiges Ticketmedium 570 gilt.

### Bezugszeichenliste:

- 102: Grundkörper
- 106: Grundkörperkontaktfläche, Grundkörperkontaktfläche
- 108: Grundkörperführungselement
- 110: Grundkörperführungselement
- 112: Grundkörperkabelöffnung
- 114: Verdrehschutzelement
- 118: geriffelte Leiste
- 120: geriffelte Leiste
- 122: erste Hilfsöffnung
- 124: weitere erste Hilfsöffnung
- 126: Befestigungsmittel
- 128: Befestigungsmittel
- 130: Grundkörperwinkel
- 204: Schlitten
- 240: Schlittenkontaktfläche
- 242: Schlittenführungselement
- 244: Schlittenführungselement
- 246: geriffelte Leiste
- 248: geriffelte Leiste
- 250: zweite Hilfsöffnung
- 252: Schlittenwinkel
- 254: Nut
- 256: Nut
- 258: Anschlagsabschnitt
- 259: Anschlagsabschnitt
- 301: Schritt
- 303: Schritt
- 305: Schritt
- 307: Schritt
- 400: Halterung
- 402: Grundkörper
- 404: Schlitten
- 406: Grundkörperkontaktfläche
- 408: Grundkörperführungselement
- 410: Grundkörperführungselement
- 412: Grundkörperkabelöffnung
- 414: Verdrehschutzelement
- 416: Verdrehschutzelement
- 418: geriffelte Leiste
- 420: geriffelte Leiste
- 422: erste Hilfsöffnung
- 424: weitere erste Hilfsöffnung
- 440: Schlittenkontaktfläche
- 442: Schlittenführungselement
- 444: Schlittenführungselement
- 446: geriffelte Leiste
- 448: geriffelte Leiste
- 450: zweite Hilfsöffnung
- 454: Nut
- 456: Nut
- 458: Anschlagsabschnitt
- 459: Anschlagsabschnitt
- 476: Gewindestangenmittelstück
- 478: Gewindestangenmittelstück
- 480: Zylinderelement
- 482: Lösungssicherung
- 484: Gewindestange
- 486: Gewindestange
- 488: Drehgelenk
- 490: Drehgelenk
- 492: Gegenstück
- 494: Gegenstück
- 496: Unterlegscheibe
- 498: Unterlegscheibe
- 500: Halterung
- 560: Personentransportfahrzeug
- 562: Geräteset
- 564: Nutzer
- 566: Gerät bzw. Validator
- 568: Schnittstelle
- 570: Ticketmedium
- 580: Zylinderelement

## Patentansprüche

1. Halterung (400, 500) zum Befestigen an einem Zylinderelement (480, 580), insbesondere zum Befestigen eines Geräts (566) an dem Zylinderelement (480, 580), umfassend:
- einen Grundkörper (102, 402) und
- einen mit dem Grundkörper (102, 402) verbindbaren Schlitten (204, 404),
- wobei eine Längsrichtung des Grundkörpers (102, 402) und des Schlittens (204, 404) im befestigten Zustand der Haltung (400, 500) im Wesentlichen parallel zur Längsachse des Zylinderelements (480, 580) verläuft,
- wobei der Grundkörper (102, 402) eine sich in Längsrichtung erstreckende Grundkörperkontaktfläche (106, 406) umfasst zum zumindest abschnittsweisen Kontaktieren einer Außenseite des Zylinderelements (480, 580),
- wobei der Grundkörper (102, 402) zumindest zwei sich im Wesentlichen in die Längsrichtung erstreckende Grundkörperführungselemente (108, 110, 408, 410) umfasst,
- wobei die Grundkörperkontaktfläche (106, 406) und die Grundkörperführungselemente (108, 110, 408, 410) um einen Grundkörperwinkel zwischen 1° und 25° gegeneinander verkippt sind,
- wobei der Schlitten (204, 404) eine sich in Längsrichtung erstreckende Schlittenkontaktfläche (240, 440) zum zumindest abschnittsweisen Kontaktieren der Außenseite des Zylinderelements (480, 580) umfasst,
- wobei der Schlitten (204, 404) zumindest zwei sich im Wesentlichen in die Längsrichtung erstreckende Schlittenführungselemente (242, 244, 442, 444) umfasst,
- wobei die Schlittenkontaktfläche (240, 440) und die Schlittenführungselemente (242, 244, 442, 444) um einen Schlittenwinkel zwischen 1° und 25° gegeneinander verkippt sind,
- wobei die Grundkörperführungselemente (108, 110, 408, 410) zu den Schlittenführungselementen (242, 244, 442, 444) derart korrespondieren, dass durch ein erstes relatives Bewegen des Schlittens (204, 404) zu dem Grundkörper (102, 402) bei in Eingriff miteinander stehenden korrespondierenden Grundkörperführungselementen (108, 110, 408, 410) und Schlittenführungselementen (242, 244, 442, 444) ein Verkleinern eines Halterungsdurchmessers (dH₁, dH₂) bewirkt wird, so dass ein Verklemmen der Halterung (400, 500) mit dem zwischen dem Grundkörper (102, 402) und dem Schlitten (204, 404) angeordneten Zylinderelement (480, 580) bewirkt wird.

2. Halterung (400, 500) nach Anspruch 1, **dadurch gekennzeichnet, dass**
- durch ein zweites, dem ersten Bewegen entgegensetztes relatives Bewegen des Schlittens (204, 404) zu dem Grundkörper (102, 402) bei in Eingriff miteinander stehenden korrespondierenden Grundkörperführungselementen (108, 110, 408, 410) und Schlittenführungselementen (242, 244, 442, 444) ein Vergrößern des Halterungsdurchmessers (dH₁, dH₂) bewirkt wird, so dass das Verklemmen der Halterung (400, 500) mit dem zwischen dem Grundkörper (102, 402) und dem Schlitten (204, 404) angeordneten Zylinderelement (480, 580) gelöst wird.

3. Halterung (400, 500) nach Anspruch 1 oder 2, **dadurch gekennzeichnet, dass**
- der Grundkörperwinkel und der Schlittenwinkel im Wesentlichen gleich sind, und/oder
- der Grundkörperwinkel zwischen 9° und 12° liegt, vorzugsweise im Wesentlichen 10° beträgt,
und/oder
- der Schlittenwinkel zwischen 9° und 12° liegt, vorzugsweise im Wesentlichen 10° beträgt.

4. Halterung (400, 500) nach einem der vorherigen Ansprüche, **dadurch gekennzeichnet, dass**
- die Grundkörperkontaktfläche (106, 406) im Wesentlichen parallel zu der Schlittenkontaktfläche (240, 440) verläuft, wenn die Grundkörperführungselemente (108, 110, 408, 410) und die Schlittenführungselemente (242, 244, 442, 444) miteinander im Eingriff sind.

5. Halterung (400, 500) nach einem der vorherigen Ansprüche, **dadurch gekennzeichnet, dass**
- der Grundkörper (102, 402) eine zu einer Kabelöffnung des Zylinderelements (480, 580) korrespondierende Grundkörperkabelöffnung (112, 412) umfasst,
- wobei die Grundkörperkabelöffnung (112, 412) eingerichtet ist zum Hindurchführen mindestens eines aus der Kabelöffnung des Zylinderelements (480, 580) herausgeführten Kabels durch die Halterung (400, 500).

6. Halterung (400, 500) nach einem der vorherigen Ansprüche, **dadurch gekennzeichnet, dass**
- der Grundkörper (102, 402) mindestens ein aus der Grundkörperkontaktfläche hervorragendes Verdrehschutzelement (114, 116, 414, 416) umfasst,
- wobei das Verdrehschutzelement (114, 116, 414, 416) in einem Verklemmungszustand der Halterung (400, 500) in eine Öffnung des Zylinderelements (480, 580) hineinragt.

7. Halterung (400, 500) nach einem der vorherigen Ansprüche, **dadurch gekennzeichnet, dass**
- eine Innenform der Schlittenkontaktfläche (240, 440) zu einer Außenform des Zylinderelements (480, 580) im Wesentlichen korrespondiert,
und/oder
- eine Innenform der Grundkörperkontaktfläche (106, 406) zu einer Außenform des Zylinderelements (480, 580) im Wesentlichen korrespondiert.

8. Halterung (400, 500) nach einem der vorherigen Ansprüche, **dadurch gekennzeichnet, dass**
- die Schlittenkontaktfläche (240, 440) mindestens eine sich in die Längsrichtung erstreckende geriffelte Leiste (246, 248, 446, 448) zum Kontaktieren der Außenseite des Zylinderelements (480, 580) umfasst, vorzugsweise mindestens zwei geriffelte Leisten (246, 248, 446, 448),
und/oder
- die Grundkörperkontaktfläche (106, 406) mindestens eine sich in die Längsrichtung erstreckende geriffelte Leiste (118, 120, 418, 420) zum Kontaktieren der Außenseite des Zylinderelements (480, 580) umfasst, vorzugsweise mindestens zwei geriffelte Leisten (118, 120, 418, 420).

9. Halterung (400, 500) nach einem der vorherigen Ansprüche, **dadurch gekennzeichnet, dass**
- zumindest ein erstes Schlittenführungselement (242, 244, 442, 444) der zwei Schlittenführungselemente (242, 244, 442, 444) als C-Profil gebildet ist, und
- zumindest ein erstes Grundkörperführungselement (108, 110, 408, 410) der zwei Grundkörperführungselemente (108, 110, 408, 410) als T-Profil gebildet ist, das zu dem C-Profil korrespondiert,
und/oder
- zumindest ein erstes Grundkörperführungselement (108, 110, 408, 410) der zwei Grundkörperführungselemente (108, 110, 408, 410) als C-Profil gebildet ist, und
- zumindest ein erstes Schlittenführungselement (242, 244, 442, 444) der zwei Schlittenführungselemente (242, 244, 442, 444) als T-Profil gebildet ist, das zu dem C-Profil korrespondiert.

10. Halterung (400, 500) nach einem der vorherigen Ansprüche, **dadurch gekennzeichnet, dass**
- die Halterung (400, 500) eine Lösungssicherung (482) umfasst,
- wobei die Lösungssicherung (482) eingerichtet ist zumindest zum Verhindern eines Lösens der Verklemmung der Halterung (400, 500) mit dem Zylinderelement (480, 580), und
- die Lösungssicherung (482) insbesondere mindestens eine zwischen dem Schlitten (204, 404) und dem Grundkörper (102, 402) herstellbare Schraubverbindung umfasst.

11. Halterung (400, 500) nach Anspruch 10, **dadurch gekennzeichnet, dass**
- ein Ende einer Gewindestange (484, 486) der Schraubverbindung verschwenkbar an dem Grundkörper (102, 402) oder an dem Schlitten (204, 404) befestigt ist,
- wobei die Gewindestange (484, 486) zwischen einer geöffneten Position und einer geschlossenen Position verschwenkbar ist,
- wobei in der geöffneten Position der Schlitten (204, 404) relativ zu dem Grundkörper (102, 402) bei in Eingriff miteinander stehenden korrespondierenden Grundkörperführungselementen (108, 110, 408, 410) und Schlittenführungselementen bewegbar ist, derart, dass ein Verklemmungszustand der Halterung bewirkt wird,
- wobei in der geschlossenen Position die Schraubverbindung herstellbar ist, derart, dass ein arretierter Verklemmungszustand der Halterung (400, 500) herstellbar ist.

12. Verwendung einer Halterung (400, 500) nach einem der vorherigen Ansprüche 1 bis 11 zum Befestigen eines Geräts an einem Zylinderelement (480, 580) in Form eines in einem Personentransportfahrzeug (560) angeordneten Rohrs.

13. Verfahren zum Befestigen einer Halterung (400, 500) nach einem der vorherigen Ansprüche 1 bis 11, umfassend:
- Anlegen des Grundkörpers (102, 402) an ein Zylinderelement (480, 580), derart, dass die Grundkörperkontaktfläche (106, 406) eine Außenseite des Zylinderelements (480, 580) zumindest abschnittsweise kontaktiert, oder Anlegen des Schlittens (204, 404) an das Zylinderelement (480, 580), derart, dass die Schlittenkontaktfläche (240, 440) die Außenseite des Zylinderelements (480, 580) zumindest abschnittsweise kontaktiert,
- Ineingriffbringen der korrespondierenden Grundkörperführungselemente (108, 110, 408, 410) und Schlittenführungselemente miteinander, und
- anschließendes relatives Bewegen des Schlittens (204, 404) zu dem Grundkörper (102, 402) in die Längsrichtung, derart, dass ein Verklemmen der Halterung (400, 500) mit dem Zylinderelement (480, 580) bewirkt wird.

14. Geräteset (562), umfassend:
- eine Halterung (400, 500) nach einem der vorherigen Ansprüche 1 bis 11, und
- ein mittels der Halterung (400, 500) an einem Zylinderelement (480, 580) befestigbares Gerät (566).

15. Personentransportfahrzeug (560), umfassend
- ein Zylinderelement (480, 580) in Form eines Rohrs,
- eine an dem Zylinderelement (480, 580) befestigte Halterung (400, 500) nach einem der vorherigen Ansprüche 1 bis 11, und
- ein an der Halterung (400, 500) angebrachtes Gerät (566), insbesondere einen Validator (566).
